(19)

Europäisches Patentamt

European Patent Office

Office européen des brevets

(11) **EP 4 601 879 B1**

(12) **EUROPEAN PATENT SPECIFICATION**

(45) Date of publication and mention of the grant of the patent:
**15.04.2026 Bulletin 2026/16**

(21) Application number: **23797675.8**

(22) Date of filing: **16.10.2023**

(51) International Patent Classification (IPC):
*B32B 27/08* (2006.01)    *B32B 27/32* (2006.01)
*C08J 5/18* (2006.01)    *C08L 23/04* (2006.01)

(52) Cooperative Patent Classification (CPC):
**B32B 27/08; B32B 1/00; B32B 27/32; C08J 5/18; C08L 23/04;** B32B 2250/03; B32B 2250/24; B32B 2250/246; B32B 2250/40; B32B 2270/00; B32B 2272/00; B32B 2307/31; B32B 2307/416; B32B 2307/514; B32B 2307/54;    (Cont.)

(86) International application number:
**PCT/EP2023/078686**

(87) International publication number:
**WO 2024/079363 (18.04.2024 Gazette 2024/16)**

(54) **POLYETHYLENE STRETCH FILM**

STRECKFOLIE AUS POLYETHYLEN

FILM ÉTIRABLE EN POLYÉTHYLÈNE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.10.2022 EP 22201699**

(43) Date of publication of application:
**20.08.2025 Bulletin 2025/34**

(73) Proprietor: **Combipac BV**
**7772 BJ Hardenberg (NL)**

(72) Inventors:
• **HENDRIKS, Benjamin**
 **9270 KALKEN (BE)**
• **RUBBRECHT, Johan**
 **9300 Aalst (BE)**

(74) Representative: **De Clercq & Partners**
 **Edgard Gevaertdreef 10a**
 **9830 Sint-Martens-Latem (BE)**

(56) References cited:
 **EP-A1- 0 562 496    EP-A1- 2 274 342**
 **EP-A1- 2 448 757    US-A- 5 685 128**

EP 4 601 879 B1

(52) Cooperative Patent Classification (CPC): (Cont.)
B32B 2307/558; B32B 2307/5825; B32B 2307/72;
B32B 2307/732; B32B 2307/7376; B32B 2439/70;
B32B 2553/00; C08J 2323/08

**Description**

**FIELD OF THE INVENTION**

The present invention is in the field of stretch films, in particular for wrapping trays, such as food trays. The present invention provides a non-oriented or mono-oriented multilayer polyethylene stretch film, use of the polyethylene stretch film, and methods for wrapping food trays using said film.

**BACKGROUND OF THE INVENTION**

Films comprising plasticized polyvinyl chloride (PVC) have been widely used in food wrapping applications in the past. In particular, PVC films provide many advantages associated with their stretchability, cling, transparency, toughness, machinability, heat sealability, resiliency and low cost, which resulted in a wide use of PVC films for food applications as well as in other applications such as pharmaceutical wrapping or pallet wrapping.

A major disadvantage of PVC films, however, is the presence of chorine, which affects the recycling possibilities of the PVC film. Therefore, alternatives of chlorine-free flexible films for use in food applications have widely been searched for, but finding a full alternative displaying the same advantages as PVC films seems to be challenging. In addition, PVC films are generally composed with high levels of plasticizer which migrate to the film surface thereby changing the initial properties of the film over time.

Polyolefin films have come the closest to achieving a combination of physical properties which approximate those of PVC films, but still providing better recycling options. However, current polyolefin films either lack the required mechanical properties or the compatibility with current polyethylene waste streams, or a combination of both. EP2274342 relates to linear low density polyethylene co-extruded films.

In view thereof, there exists a need for further and/or improved wrapping films for food applications which comply with the current requirements for recycling and which solve at least to a certain extent the aforementioned problems.

**SUMMARY**

In the present invention, a non-oriented or mono-oriented multilayer polyethylene stretch film is provided that is considered recyclable and compatible with the current polyethylene recycling technologies and waste streams, and wherein said film provides excellent mechanical and optical properties. More specifically, a non-oriented or mono-oriented multilayer polyethylene stretch film is provided that comprises a high content of polyethylene and that has a low overall density, thereby providing very good recycling characteristics and mechanical properties for use in food wrapping applications.

Hence, a first aspect of the present invention relates to a non-oriented or mono-oriented multilayer stretch film comprising at least 70 wt% polyethylene relative to the total weight of the film, and wherein the film is typically characterized by:

- an overall density that is below 0.907 g/cm$^3$, wherein the overall density is calculated based on the polyethylene weight content of the film;
- a positive tensile stress-strain curve over the range of 0% to 20.0% strain wherein the stress-strain curve is created by measurements of stress at each 5.0% strain interval and the stress is measured according to the ASTM D882-18 standard in the transverse direction of the film; and
- a plastic deformation of maximum 15.0% as measured in the transverse direction, wherein the plastic deformation is measured according to the ASTM D5459-95 standard.

Surprisingly, the inventors found that the stretch film of the present invention is considered recyclable and compatible with current PE waste streams and according to currently active guidelines for recycling in Europe, such as the Ceflex (June 2020) or RecyClass (June 2021) guidelines. In addition, the film shows a positive tensile stress-strain curve up to 20% strain, even up to 50% strain, so that the film can be applied on a wide range of tray sizes. Furthermore, the film of the present invention displays a small plastic deformation, also referred to herein as permanent deformation, and a fast elastic recovery. Finally, because of its low overall density and better structural integrity and mechanical properties such as impact and tear resistance, as compared to PVC films, the stretch film as taught herein provides both environmental as well as economic benefits since less film material needs to be used to wrap a food tray without compromising quality.

The stretch film as taught herein is a multilayer film. In certain embodiments, the stretch film is a multilayer film that comprises at least one core layer arranged between two outer layers.

In certain embodiments, the polyethylene in the stretch film as taught herein is a copolymer of ethylene and at least one alpha-olefin, preferably at least one $C_3$-$C_8$ alpha-olefin, more preferably at least one $C_4$-$C_8$ alpha-olefin, even

more preferably at least one $C_6$-$C_8$ alpha-olefin. In certain embodiments, the polyethylene in the stretch film as taught herein is a combination of an ethylene homopolymer and a copolymer of ethylene and at least one alpha-olefin.

In certain embodiments, the stretch film as taught herein is an extruded blown film or an extruded cast film.

In a related aspect, the stretch film as taught herein is suitable for use in food packaging applications, in particular suitable for use in overwrapping food trays.

A further aspect relates to the use of the stretch film as taught herein for food packaging, in particular for overwrapping food trays.

A further aspect relates to a food tray that is overwrapped with the stretch film as taught herein, in particular wherein the food tray comprises a food product.

Another aspect relates to a method of overwrapping a food tray with a stretch film as taught herein. Said method comprises providing a food tray to a wrapping unit, providing a stretch film as taught herein to a stretching unit, stretching the stretch film in transverse direction in the stretching unit, applying the stretch film on the food tray in the wrapping unit and sealing the edges of the stretch film beneath the food tray.

These and further aspects and preferred embodiments of the invention are described in detail in the following sections and in the appended claims. The subject-matter of the appended claims is hereby specifically incorporated in this specification.

**BRIEF DESCRIPTION OF DRAWINGS**

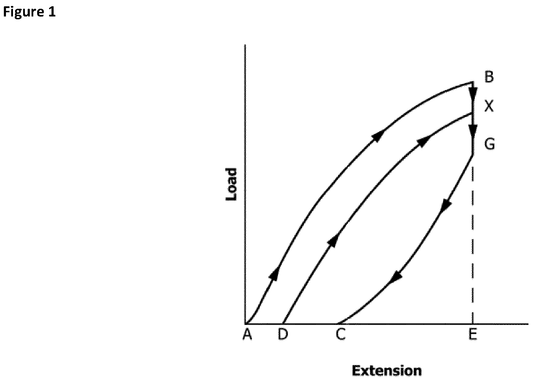

**Figure 1.** Schematic representation of the method used to determine the permanent or plastic deformation of a film.

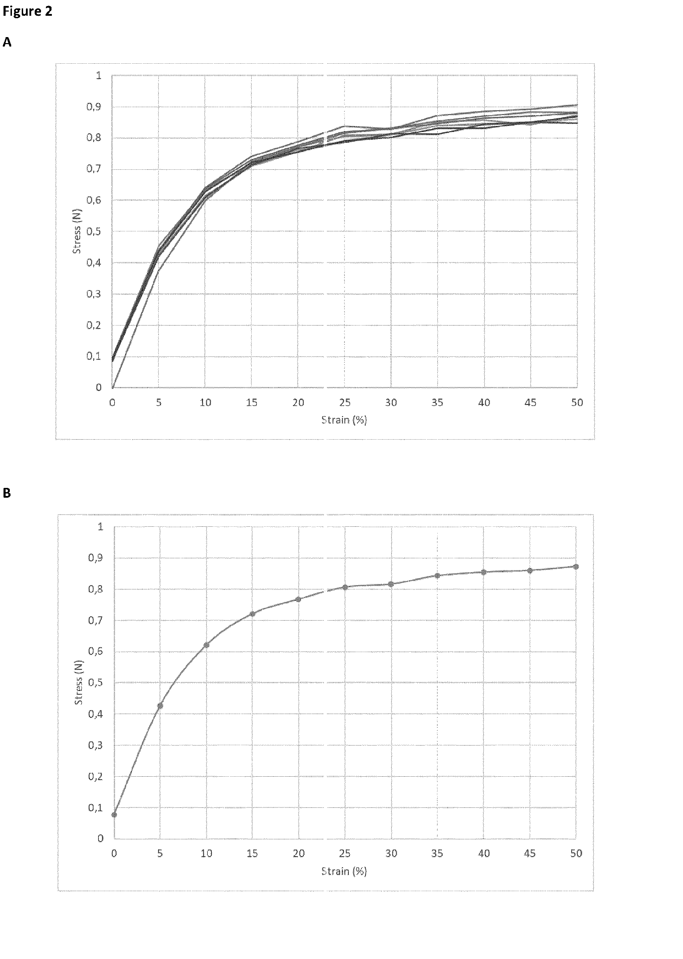

**Figure 2.** Stress-strain curves of specimens (n=8) of Film 1, a film according to an embodiment of the invention. Different film specimen of Film 1 are tested according to the ASTM D882-18 standard to measure the tensile properties of the film in the transverse direction and the applied strain (in %) is displayed relative to the observed stress (force, in N) to generate the stress-strain curve. Figure 2A displays the stress-strain curves for each specimen individually, whereas Figure 2B displays the average stress-strain curve of all specimen.

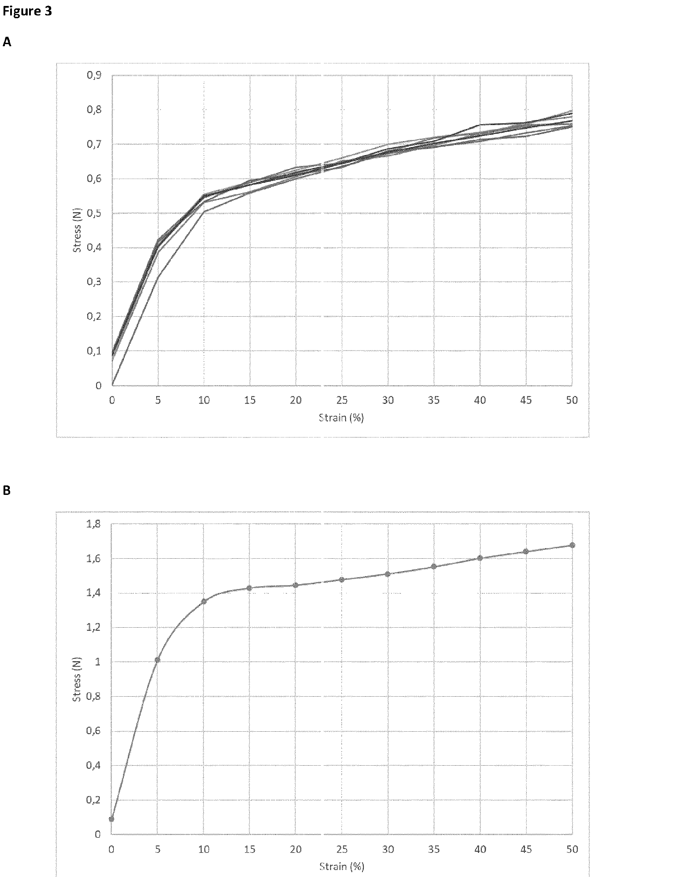

**Figure 3.** Stress-strain curves of specimens (n=8) of Film 2, a film according to an embodiment of the invention. Different film specimen of Film 2 are tested according to the ASTM D882-18 standard to measure the tensile properties of the film in the transverse direction and the applied strain (in %) is displayed relative to the observed stress (force, in N) to generate the stress-strain curve. Figure 3A displays the stress-strain curves for each specimen individually, whereas Figure 3B displays the average stress-strain curve of all specimen.

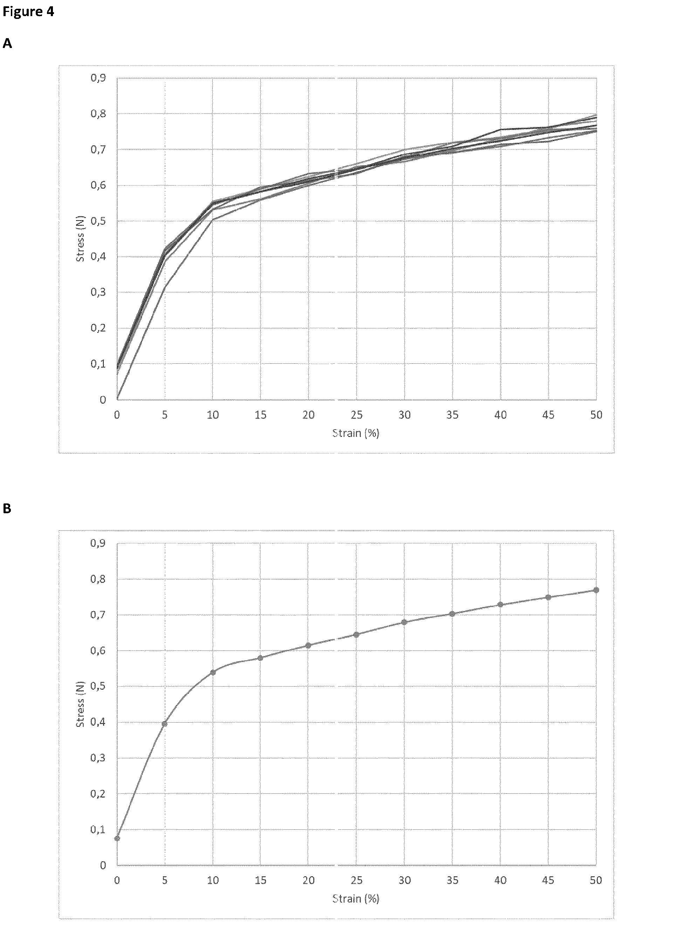

**Figure 4.** Stress-strain curves of specimens (n=8) of Film 3, a film according to an embodiment of the invention. Different film specimen of Film 3 are tested according to the ASTM D882-18 standard to measure the tensile properties of the film in the transverse direction and the applied strain (in %) is displayed relative to the observed stress (force, in N) to generate the stress-strain curve. Figure 4A displays the stress-strain curves for each specimen individually, whereas Figure 4B displays the average stress-strain curve of all specimen.

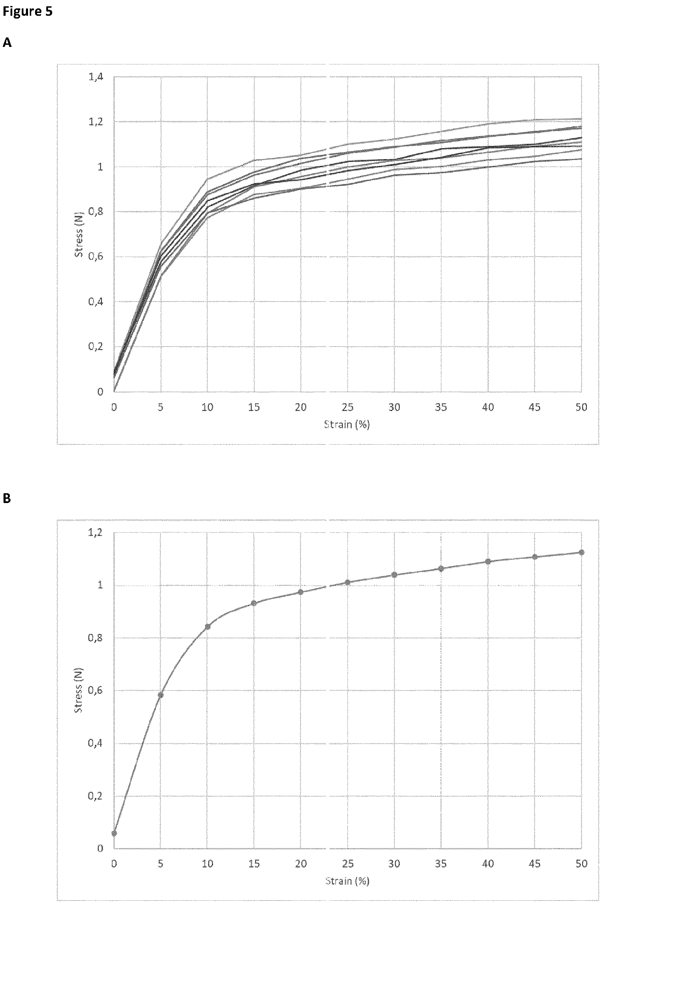

**Figure 5.** Stress-strain curves of specimens (n=8) of Film 4, a film according to an embodiment of the invention. Different film specimen of Film 4 are tested according to the ASTM D882-18 standard to measure the tensile properties of the film in the transverse direction and the applied strain (in %) is displayed relative to the observed stress (force, in N) to generate the stress-strain curve. Figure 5A displays the stress-strain curves for each specimen individually, whereas Figure 5B displays the average stress-strain curve of all specimen.

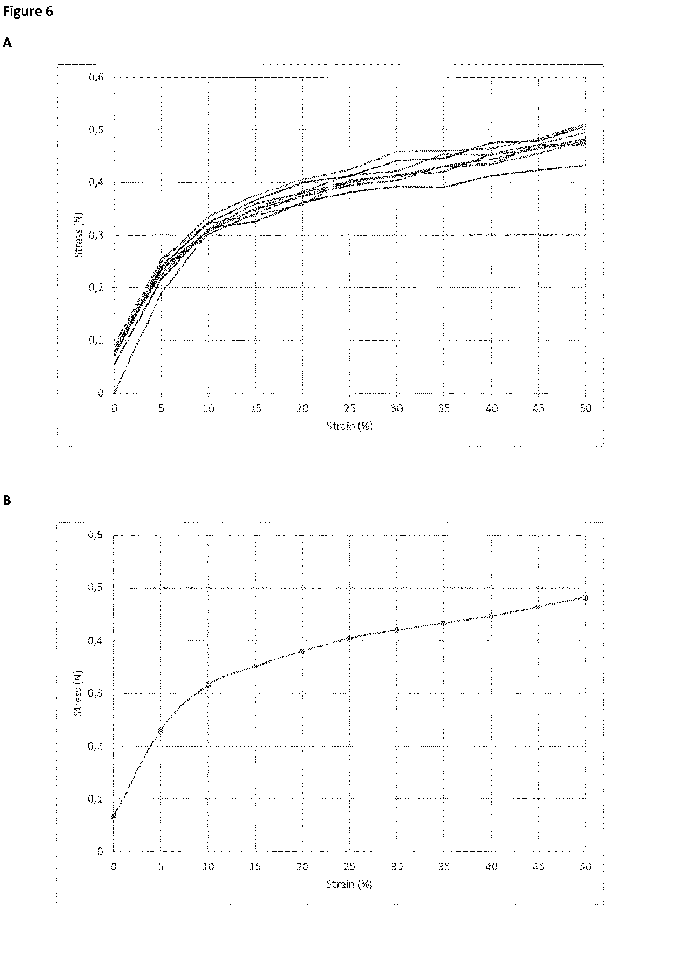

**Figure 6.** Stress-strain curves of specimens (n=8) of Film 5, a film according to an embodiment of the invention. Different film specimen of Film 5 are tested according to the ASTM D882-18 standard to measure the tensile properties of the film in the transverse direction and the applied strain (in %) is displayed relative to the observed stress (force, in N) to generate the stress-strain curve. Figure 6A displays the stress-strain curves for each specimen individually, whereas Figure 6B displays the average stress-strain curve of all specimen.

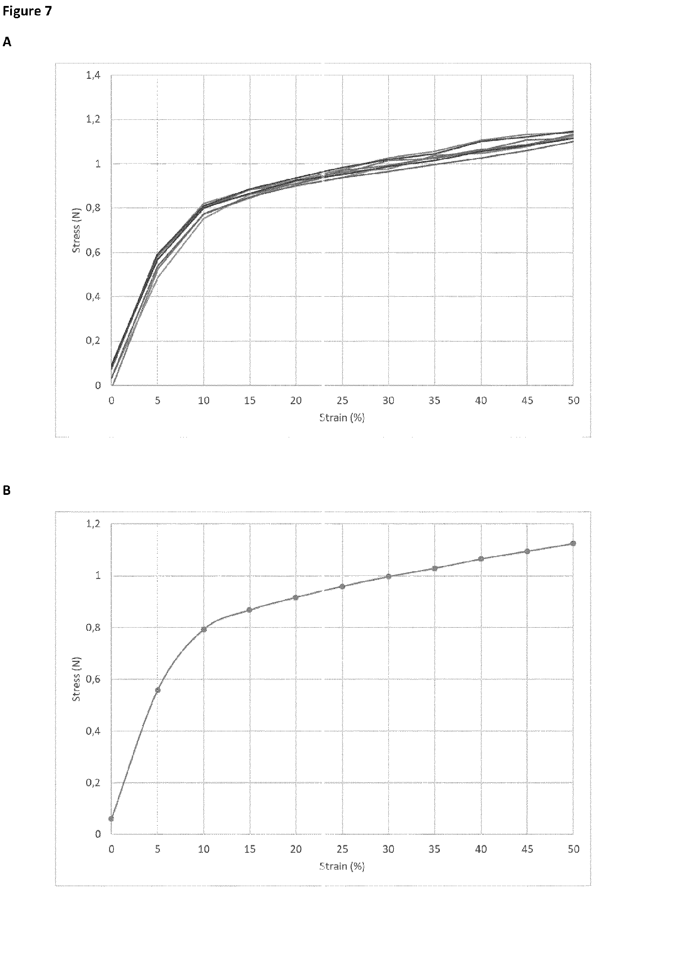

**Figure 7.** Stress-strain curves of specimens (n=8) of Film 6, a film according to an embodiment of the invention. Different film specimen of Film 6 are tested according to the ASTM D882-18 standard to measure the tensile properties of the film in the transverse direction and the applied strain (in %) is displayed relative to the observed stress (force, in N) to generate the stress-strain curve. Figure 7A displays the stress-strain curves for each specimen individually, whereas Figure 7B displays the average stress-strain curve of all specimen.

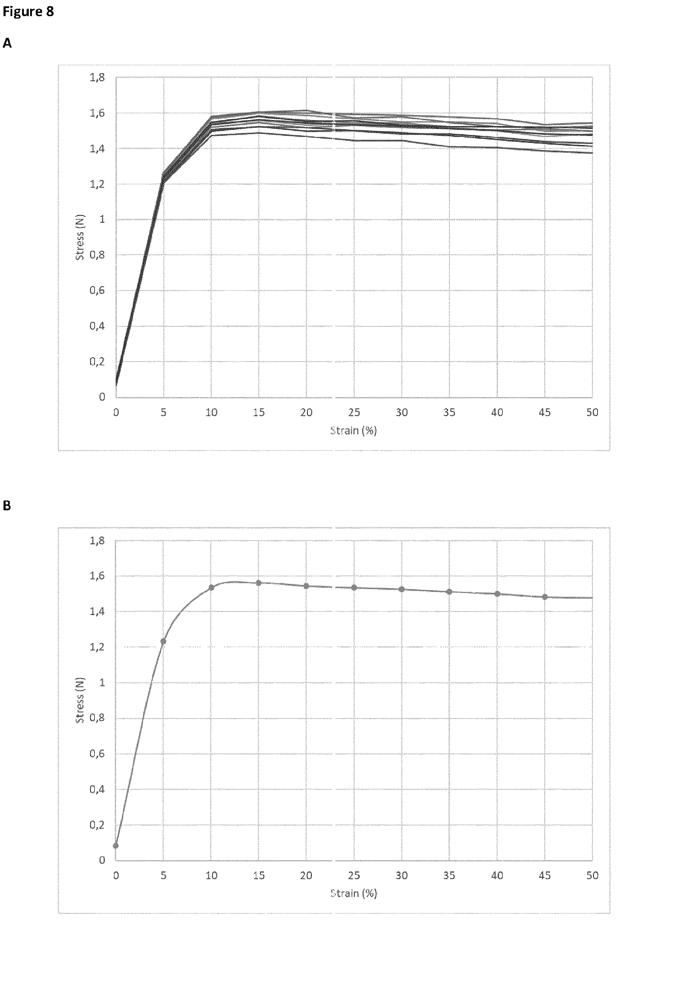

**Figure 8.** Stress-strain curves of specimens (n=8) of a currently available film (Film 7, comparative example). Different film specimen of the prior art film are tested according to the ASTM D882-18 standard to measure the tensile properties of the film in the transverse direction and the applied strain (in %) is displayed relative to the observed stress (force in N) to generate the stress-strain curve. Figure 8A displays the stress-strain curves for each specimen individually, whereas Figure 8B displays the average stress-strain curve of all specimen.

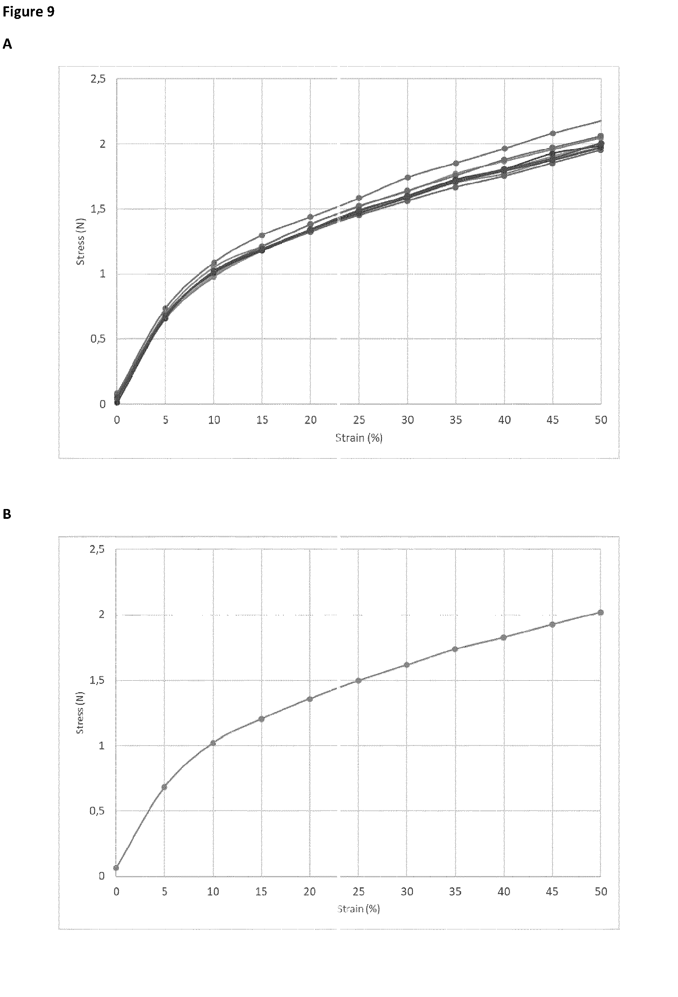

**Figure 9.** Stress-strain curves of specimens (n=8) of a currently available PVC film (Film 8, comparative example). Different film specimen of the film are tested according to the ASTM D882-18 standard to measure the tensile properties of the film in the transverse direction and the applied strain (in %) is displayed relative to the observed stress (force in N) to generate the stress-strain curve. Figure 9A displays the stress-strain curves for each specimen individually, whereas Figure 9B displays the average stress-strain curve of all specimen.

## DESCRIPTION OF EMBODIMENTS

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms also encompass "consisting of" and "consisting essentially of", which enjoy well-established meanings in patent terminology.

The recitation of numerical ranges by endpoints includes all numbers and fractions subsumed within the respective ranges, as well as the recited endpoints.

The terms "about" or "approximately" as used herein when referring to a measurable value such as a parameter, an amount, a temporal duration, and the like, are meant to encompass variations of and from the specified value, such as variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

Furthermore, the terms first, second, third in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

Whereas the terms "one or more" or "at least one", such as one or more members or at least one member of a group of members, is clear per se, by means of further exemplification, the term encompasses *inter alia* a reference to any one of said members, or to any two or more of said members, such as, e.g., any $\geq 3$, $\geq 4$, $\geq 5$, $\geq 6$ or $\geq 7$. of said members, and up to all said members. In another example, "one or more" or "at least one" may refer to 1, 2, 3, 4, 5, 6, 7 or more.

The discussion of the background to the invention herein is included to explain the context of the invention. This is not to be taken as an admission that any of the material referred to was published, known, or part of the common general knowledge in any country as of the priority date of any of the claims.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the invention. When specific terms are defined in connection with a particular aspect of the invention or a particular embodiment of the invention, such connotation is meant to apply throughout this specification, i.e., also in the context of other aspects or embodiments of the invention, unless otherwise defined.

In the following passages, different aspects or embodiments of the invention are defined in more detail. Each aspect or embodiment so defined may be combined with any other aspect(s) or embodiment(s) unless clearly indicated to the contrary. In particular, any feature indicated as being preferred or advantageous may be combined with any other feature or features indicated as being preferred or advantageous.

As corroborated in the example section, the inventors of the present application developed a non-oriented or mono-oriented multilayer stretch film that is particularly useful in food wrapping applications because of its stretching and recycling capacities. The non-orientation or only mono-orientation of the film allows a higher stretchability in at least one direction during the final application of the film, meaning that the film can still be stretched more during application. This is in contrast to biaxially-oriented films, wherein the amount of stretch that can be applied before the film breaks is lower. Also, biaxial orientation of a film will increase overall crystallinity, and thus decreasing the elastic stretching behaviour and sealability of the film. Moreover, mono-orientation can negate a part of the polymer orientation induced during the extrusion process. Furthermore, because of the high content of polyethylene (PE) in the film, the film is considered compatible with current PE waste streams and recyclable according to currently active guidelines of recycling in Europe. Furthermore, the high PE content in the film is combined with a low overall density, which results in a lightweight and stretchable film, rendering it perfect for use in food applications. More specifically, because of its high PE content and low density, the film of the invention is able to withstand a lot of stretching and manipulation before it actually breaks. Another characteristic of the film of the invention is that it has a positive tensile stress-strain curve over the range of 0% to at least 20% strain, wherein the stress-strain curve is created by using measurements of stress at each 5% strain interval, and where the stress is measured in the transverse direction. This results in a film that can be stretched homogeneously in the transverse direction up to 20%, and in particular up to 50%. This stretching behaviour ensures that a certain film width can be applied on a wide range of different tray sizes with an aesthetically pleasing result. The stretch film as taught herein is also characterized by a plastic deformation (also referred to as permanent deformation) of maximum 15.0% in the transverse direction, which ensures that after removal of the strain, the permanent deformation of the film is reduced to a minimum. Furthermore, the stretch film shows a fast elastic response, which is a measure of how fast the film will tighten itself around the tray, and a good stress retention (preferably above 75%) ensuring a snug product fixation in the tray. Moreover, the low density film of the invention shows a higher impact resistance as compared to other available PE-based films, making the film less easier to pierce than the PE-based films already on the market. Overall, the present invention thus provides a film with both environmental as well as economic benefits in combination with excellent mechanical properties. In particular, because of its high PE content, the film is considered recyclable and compatible with the current recycling technologies, whereas the plastic deformation characteristics ensure that the film behaves elastically with a small permanent deformation after applying a strain to the film. As a result, thumb imprinting on the food trays is reduced. Finally, the very low overall density of the film in combination with the excellent structural integrity of the film, in particular with excellent impact resistance and an optimal tear resistance provides both economic as well as environmental benefits since less material needs to be used to wrap a food tray.

Accordingly, in a first aspect, the invention provides a non-oriented or mono-oriented multilayer stretch film comprising at least 70 wt% polyethylene relative to the total weight of the film. Said film is typically characterized by:

- an overall density below 0.907 g/cm$^3$, wherein the overall density is calculated based on the polyethylene weight content of the film;
- a positive tensile stress-strain curve over the range of 0% to 20.0% strain, wherein the stress-strain curve is created by using measurements of stress at each 5.0% interval of the strain, and wherein the stress is measured according to the ASTM D882-18 standard in the transverse direction of the film; and
- a plastic deformation of maximum 15.0% as measured in the transverse direction, wherein the plastic deformation is measured according to the ASTM D5459-95 standard.

As used herein, the term "film" includes skins, sheets, or membranes of a thickness of from less than 1000 $\mu$m, more preferably from less than 500 $\mu$m thickness, and even more preferably less than 200 $\mu$m, and most preferably from less than 100 $\mu$m, and includes films fabricated by any process known in the art such as casting or blowing techniques, from extruded polyethylene as defined herein.

As used herein, the term "stretch film", or also referred to as "stretch wrap" or a "stretch wrap film" or "wrap film" refers to a stretchable film that can be stretch-wrapped around items such as food trays, whereby the elastic recovery of the film keeps the items tightly fixed.

The terms "stretch film" and "film" are used interchangeably herein.

In the context of the invention, the stretch film is a stretch film used for food applications. The stretch film used for food applications is particularly suitable for food packaging applications. More specific, the stretch film as taught herein is suitable for use in overwrapping food trays. The food trays can of any size.

The film according to the invention is a non-oriented or mono-oriented film. In some embodiments, the film is a non-oriented multilayer stretch film, or a mono-oriented multilayer stretch film that is oriented in either the machine direction or in the transverse direction. In some embodiments, the film is a non-oriented multilayer stretch film. In some embodiments, the film is a mono-oriented multilayer stretch film that is oriented in the machine direction but not in the transverse direction. In other embodiments, the film is a mono-oriented multilayer stretch film that is oriented in the transverse direction but not in the machine direction. The film of the present invention is thus a film that is not oriented in both the machine and the transverse direction. The film of the present invention is not a double-oriented film.

As used herein, a "non-oriented stretch film" refers to a film that is not stretched in any direction following extrusion through a die into either tubular or sheet form.

Typically, oriented (or preoriented) films are produced by a process in which a film, after extrusion, is stretched (inline or outline) in at least one direction, such as in the machine direction and/or transverse direction, to align the crystallites and polymers/molecules of the material. Typically, the stretch ratio applied in a given direction during orienting the film may be at least 1.0:2.0 (original dimension : dimension after orientation), such as at least 1.0:2.5, at least 1.0:3.0, at least 1.0:3.5, or at least 1.0:4.0. The skilled person understands that during production a non-oriented film may also inadvertently or intentionally become tensioned after extrusion, for example to enable seamless passage of the film over the rolls of the production apparatus or tight winding of the film onto a reel core. However, such limited tensioning does not amount to orienting the film, and a film tensioned in this manner can thus be denoted as non-oriented despite this limited tensioning. For example, a non-oriented film may display a stretch ratio applied after extrusion of the film and before and/or during winding of the film onto a reel core of less than 1.0:2.0 (original dimension : dimension after tensioning), such as 1.0:1.5 or less, 1.0:1.4 or less, 1.0:1.3 or less, 1.0:1.2 or less, 1.0:1.1 or less, or 1.0:1.05 or less.

In some embodiments, the film is a mono-oriented film, in particular a mono-oriented film that is oriented in the machine direction but not in the transverse direction. In some embodiments, the film is a mono-oriented film that is oriented in the transverse direction but not in the machine direction. A mono-oriented film as used herein is a film that is only stretched in one direction following extrusion through a die into either a tubular or sheet form. The mono-oriented film of the invention is thus only stretched in the machine direction or in the transverse direction following extrusion through a die into either tubular or sheet form. In mono-oriented films, the film is thus, after extrusion, only stretched (inline or outline) in one direction, either in the machine direction or in the transverse direction, but not in both directions.

As used herein, the term "double-oriented film", or also known as "biaxially oriented film" is to be understood as a film that is oriented or stretched both in the transverse or cross-direction and in the machine direction following extrusion.

The stretch film as taught herein is typically characterized by a high polyethylene (PE) content, wherein the stretch film comprises at least 70 wt% PE relative to the total weight of the film. The film thus comprises at least 70% by weight of PE, with % by weight relative to (i.e., compared with) the total weight of the film as taught herein. In certain embodiments, the stretch film as taught herein comprises at least 75 wt%, relative to the total weight of the film.

In certain embodiments, the film comprises at least 80 wt%, at least 85 wt%, at least 90 wt%, or at least 95 wt% of PE, relative to the total weight of the film, which offers the possibility to make the film compatible with Ceflex recycling guidelines.

In certain embodiments, the film as taught herein may comprise at least 90 wt% of PE which offers the possibility to make the film fully compatible with current recycling guidelines and PE waste streams.

In certain embodiments, the film as taught herein may comprise from 70 wt% to 100 wt% of PE, relative to the total weight of the film. In certain embodiments, the film as taught herein may comprise from 70 wt% to 99 wt% of PE, from 75 wt% to 99 wt% of PE, or from 80 wt% to 99 wt% of PE, or from 85 wt% to 99 wt% PE, or from 90 wt% to 99 wt% of PE, relative to the total weight of the film as taught herein.

For example, the film as taught herein may comprise 70 wt%, 75 wt%, 80 wt%, 81 wt%, 82 wt%, 83 wt%, 84 wt%, 85 wt%, 86 wt%, 87 wt%, 88 wt%, 89 wt%, 90 wt%, 91 wt%, 92 wt%, 93 wt%, 94 wt%, 95 wt%, 96 wt%, 97 wt%, 99 wt%, or even 100 wt% of PE, relative to the total weight of the film as taught herein.

In certain embodiments, the film as taught herein may comprise at least 90 wt% of PE, relative to the total weight of the film. In certain embodiments, the film as taught herein may thus comprise from 90 wt% to 100 wt% of PE, or from 90 wt% to 99 wt% of PE, or from 90 wt% to 98 wt% of PE, or from 90 wt% to 97 wt%, or from 90 wt% to 96 wt% of PE, or from 90 wt% to 95 wt% of PE, relative to the total weight of the film as taught herein.

"Polyethylene" as used herein refers to a polymer whose basic structure is characterized by the chain $(CH_2CH_2)_n$. Polyethylene can be a "polyethylene homopolymer" or "ethylene homopolymer" or "homopolymer of ethylene" wherein a homopolymer is formed of multiple monomer units of ethylene. Polyethylene can also be a copolymer of ethylene and at least one other unit, such as an alpha-olefin. These other units such as alpha-olefins can be incorporated in the polymer chain during polymerization. The term "copolymer of ethylene and an alpha-olefin refers to a polymer that contains more than 50 wt% polymerized ethylene monomer and at least one other alpha-olefin comonomer, relative to the total weight of the polymer.

Examples of polyethylene include low density polyethylene (LDPE), linear low density polyethylene (LLDPE), very-low density polyethylene (VLDPE), ultra-low density polyethylene (ULDPE), medium density polyethylene (MDPE), high density polyethylene (HDPE).

Examples of ethylene copolymers include copolymers of ethylene with one or more alpha-olefins such as propylene ($C_3$), butene ($C_4$), hexene ($C_6$) and/or octene ($C_8$).

The stretch film as taught herein comprises at least 70 wt% of PE relative to the total weight of the film. The PE in the stretch film can be any type of PE or combination of different types of PE on the condition that the overall density of the film is below 0.907 g/cm$^3$, wherein the overall density is calculated based on the polyethylene content of the film. In some embodiments, the PE in the film as taught herein comprises at least a copolymer of ethylene and at least one alpha-olefin. In certain embodiments, the PE in the film as taught herein comprises at least a copolymer of ethylene and at least one $C_3$-$C_8$ alpha-olefin. In some embodiments, the PE in the film as taught herein comprises at least a copolymer of ethylene and at least one alpha-olefin, in combination with a polyethylene homopolymer

In certain embodiments, the stretch film as taught herein comprises at least 70 wt% of PE relative to the total weight of the film, such as at least 80 wt% or at least 90 wt%, wherein the PE is a copolymer of ethylene and at least one alpha-olefin. In certain embodiments, the stretch film as taught herein comprises PE wherein the PE is a copolymer of ethylene and at least one $C_3$-$C_8$ alpha-olefin. In certain embodiments, the stretch film as taught herein comprises PE wherein the PE is a copolymer of ethylene and at least one $C_4$-$C_8$ alpha-olefin. In certain embodiments, the stretch film as taught herein comprises PE wherein the PE is a copolymer of ethylene and at least one $C_6$-$C_8$ alpha-olefin.

In some embodiments, the stretch film as taught herein comprises at least 70 wt% of PE relative to the total weight of the film, such as at least 80 wt% or at least 90 wt%, wherein the PE is a copolymer of ethylene and $C_3$ alpha-olefin (propylene).

In some embodiments, the stretch film as taught herein comprises at least 70 wt% of PE relative to the total weight of the film, such as at least 80 wt% or at least 90 wt%, wherein the PE is a copolymer of ethylene and $C_4$ alpha-olefin (butene).

In some embodiments, the stretch film as taught herein comprises at least 70 wt% of PE relative to the total weight of the film, such as at least 80 wt% or at least 90 wt%, wherein the PE is a copolymer of ethylene and $C_5$ alpha-olefin (pentene).

In some embodiments, the stretch film as taught herein comprises at least 70 wt% of PE relative to the total weight of the film, such as at least 80 wt% or at least 90 wt%, wherein the PE is a copolymer of ethylene and $C_6$ alpha-olefin (hexene).

In some embodiments, the stretch film as taught herein comprises at least 70 wt% of PE relative to the total weight of the film, such as at least 80 wt% or at least 90 wt%, wherein the PE is a copolymer of ethylene and $C_7$ alpha-olefin (heptene).

In some embodiments, the stretch film as taught herein comprises at least 70 wt% of PE relative to the total weight of the film, such as at least 80 wt% or at least 90 wt%, wherein the PE is a copolymer of ethylene and $C_8$ alpha-olefin (octene).

In some embodiments, the stretch film as taught herein comprises at least 70 wt% of PE relative to the total weight of the film, such as at least 80 wt% or at least 90 wt%, wherein the PE is a copolymer of ethylene and $C_6$ alpha-olefin (hexene) or a copolymer of ethylene and $C_8$ alpha-olefin (octene). In some embodiments, the stretch film as taught herein comprises at least 70 wt% of PE relative to the total weight of the film, such as at least 80 wt% or at least 90 wt%, wherein the PE is a combination of a copolymer of ethylene and $C_6$ alpha-olefin (hexene) with a copolymer of ethylene and $C_8$ alpha-olefin (octene). In some embodiments, the stretch film comprises at least 70 %wt of PE relative to the total weight of the film, such as at least 80 wt% or at least 90 wt%, wherein the PE is a copolymer of ethylene and both $C_6$ alpha-olefin (hexene) and $C_8$ alpha-olefin (octene).

In some embodiments, the film as taught herein comprises at least 70 wt% of PE relative to the total weight of the film, such as at least 80 wt%, or at least 90 wt%, wherein the PE is a combination of a copolymer of ethylene and at least one alpha-olefin and a polyethylene homopolymer. In some embodiments, the PE is a combination of a copolymer of ethylene and at least one $C_3$-$C_8$ alpha-olefin.

In certain embodiments, the film as taught herein comprises at least 70 wt% of PE relative to the total weight of the film wherein the PE comprises at least a linear low density polyethylene (LLDPE), at least a very-low density polyethylene (VLDPE), or at least both a LLDPE and a VLDPE.

In certain embodiments, the film as taught herein comprises at least 70 wt% of PE relative to the total weight of the film wherein the PE is a LLDPE. In certain embodiments, the film as taught herein comprises at least 70 wt% of PE relative to the total weight of the film wherein the PE is a VLDPE. In some embodiments, the film as taught herein comprises at least 70 wt% of PE relative to the total weight of the film wherein the PE is a combination of a LLDPE and a VLDPE.

The term "linear low density polyethylene" (LLDPE) refers to a substantially linear polymer, with optionally a number of short branches, typically made by copolymerization of ethylene with longer-chain olefins, such as 1-butene, 1-hexene, and 1-octene. LLDPE generally has a density lower than 0.925 g/cm$^3$. Typically, LLDPE's have a density of between 0.915 g/cm$^3$ and 0.925 g/cm$^3$.

In certain embodiments, the film as taught herein may comprise at least 70 wt%, preferably at least 90 wt%, of LLDPE, relative to the total weight of the film. In certain embodiments, the film as taught herein comprises at least 70 wt%, at least 75 wt%, at least 80 wt%; at least 85 wt%, at least 90 wt% of LLDPE relative to the total weight of the film as taught herein.

In certain embodiments, the film as taught herein comprises from 70 wt% to 99 wt% of LLDPE, relative to the total weight of the film. In certain embodiments, the film as taught herein comprises from 75 wt% to 99 wt%, from 80 wt% to 99 wt%, from 85 wt% to 99 wt%, from 90 wt% to 99 wt% or from 95 wt% to 99 wt% of LLDPE, relative to the total weight of the film as taught herein.

In certain embodiments, the LLDPE present in the film as taught herein is a copolymer of ethylene and an alpha-olefin. In certain embodiments, the LLDPE is a copolymer of ethylene and propylene (C3 LLDPE) a copolymer of ethylene and butene (C4 LLDPE), a copolymer of ethylene and hexene (C6 LLDPE), a copolymer of ethylene and octene (C8 LLDPE), or a combination thereof.

An example of a LLDPE that can be used in the film as taught herein include, but is not limited to: Dowlex™ GM 8490 polyethylene resin (Dow).

The term "very-low density polyethylene" (VLDPE), which is also called "ultra-low density polyethylene" (ULDPE) refers to a substantially linear polymer, with optionally a significant number of short branches, typically made by copolymerization of ethylene with longer-chain olefins, such as 1-butene, 1-hexene, and 1-octene, but with a lower density than LLDPEs. VLDPEs generally have a density of between 0.860 and 0.915 g/cm$^3$.

In certain embodiments, the film as taught herein may comprise at least 70 wt%, preferably at least 90 wt%, of VLDPE, relative to the total weight of the film. In certain embodiments, the film as taught herein comprises at least 70 wt%, at least 75 wt%, at least 80 wt%; at least 85 wt%, at least 90 wt% of VLDPE relative to the total weight of the film as taught herein.

In certain embodiments, the film as taught herein comprises from 70 wt% to 99 wt% of VLDPE, relative to the total weight of the film. In certain embodiments, the film as taught herein comprises from 75 wt% to 99 wt%, from 80 wt% to 99 wt%, from 85 wt% to 99 wt%, from 90 wt% to 99 wt% or from 95 wt% to 99 wt% of VLDPE, relative to the total weight of the film as taught herein.

In certain embodiments, the VLDPE present in the film as taught herein is a copolymer of ethylene and an alpha-olefin. In certain embodiments, the VLDPE is a copolymer of ethylene and propylene (C3 VLDPE), a copolymer of ethylene and butene (C4 VLDPE), a copolymer of ethylene and hexene (C6 VLDPE), a copolymer of ethylene and octene (C8 VLDPE), or a combination thereof.

In some embodiments, the PE present in the film as taught herein comprises a copolymer of ethylene and hexene (C6 VLDPE) or a copolymer of ethylene and octene (C8 VLDPE). In some embodiments, the PE present in the film as taught herein comprises a copolymer of ethylene and hexene (C6 VLDPE). In some embodiments, the PE present in the film as taught herein comprises a co-polymer of ethylene and octene (C8 VLDPE). In some embodiments, the PE present in the film as taught herein comprises a copolymer of ethylene and hexene (C6 VLDPE) and a copolymer of ethylene and octene (C8 VLDPE). The selection of copolymer of hexene (C6) or octene (C8) ensures that the film is particularly suitable for food applications and has a good structural integrity.

Examples of VLDPEs that can be used in the film of the invention are, but are not limited to, Affinity™ PL1850G polyolefin (Dow), Affinity™ EG8100G polyolefin (Dow), Affinity™ EG8200G (Dow), Elite™ AT6507 (Dow), or Queo™ 8203 (Borealis).

In certain embodiments, the VLDPE used in the film may have a density of at most 0.915 g/cm$^3$. In certain embodiments, the VLDPE may have a density of at most 0.905 g/cm$^3$, at most 0.900 g/cm$^3$, at most 0.890 g/cm$^3$, or at most 0.880 g/cm$^3$. For instance, the VLDPE may have a density of 0.902 g/cm$^3$ (*e.g.,* Elite™ AT6507), a density of 0.870 g/cm$^3$ (*e.g.,* Affinity™ EG8200G), or a density of 0.883 g/cm$^3$ (*e.g.,* Queo™ 8203).

In certain embodiments, the film as taught herein may comprise "medium density polyethylene" or "MDPE". The term "medium density polyethylene" or "MDPE" typically refers to polyethylene with a density generally of about 0.926 g/cm$^3$ to about 0.940 g/cm$^3$. MDPE may be prepared by the polymerization of ethylene monomers.

Examples of MDPE's that can be used in the film as taught herein include, but are not limited to: Marlex® HHM TR-131 polyethylene or polyethylene MDPE HT514.

In certain embodiments, the film may comprise a high density polyethylene (HDPE). The term "HDPE" refers to polyethylene with a density of about 0.941 g/cm$^3$ to about 0.970 g/cm$^3$. HDPE may be prepared by the polymerization of ethylene monomers.

Examples of HDPEs that can be used in the film as taught herein include, but are not limited to, Eraclene® FA 506 HDPE, Eraclene® HDPE FA, ExxonMobil™ HDPE HTA 002HD5; ExxonMobil™ HDPE HTA 108, or Repsol Alcudia TR156G.

The stretch film as taught herein is characterized by a low overall density, more specific an overall density that is below 0.907 g/cm$^3$, wherein the overall density is calculated or measured based on the polyethylene weight content of the film. Thus, the overall density of the film as taught herein is calculated by only taking the density of all polyethylene components comprised by the film into account, whereas the presence of any other (non-PE) component in the film is not taken into account. More specific, the overall density based on the PE weight content is calculated based on the relative PE weight content of each PE comprising ingredient in the film, including also the relative PE weight content of any additives that might be present in the film. The overall density based on the PE weight content is thus calculated using the following formula:

$$\textit{Overall density (g/cm}^3\textit{) = (Overall PE content in wt\% in the film) / } \sum \textit{ (wt\% of PE}_{1-n} \textit{ / density of PE}_{1-n}\textit{),}$$

wherein *wt% of PE$_{1-n}$* (*i.e., wt% of PE$_1$ to wt% of PE$_n$*) each represent the relative amount of PE from components 1 to n in the film, calculated for each PE-containing component *PE$_1$* to *PE$_n$* as wt% of PE in that particular component × wt% of that particular component in the film; and density of *PE$_{1-n}$* (*i.e., density of PE$_1$ to density PE$_n$*) each represent the density of PE present in component 1 to n.

The overall density based on the PE weight content can thus also be expressed by the following formula:

$$\text{Overall density (g/cm}^3) = \text{total PE content in the film (wt\%)} / \sum_{i=1}^{n} \frac{\text{wt\% PE}_i}{\text{density PE}_i \text{ (g/cm}^3)}$$

wherein $i$ is the index of summation and indicates that the index $i$ starts out equal to 1 (so 1 is the lower bound of summation); and wherein $n$ is the upper bound of summation. The formula represented above thus provides successive integer numbering to the PE-containing components of the film (e.g., in a film with three PE-containing components $n$ will be 3 and $i$ is 1); wt% of $PE_i$ represents the relative amount of PE from PE-containing component $i$ in the film, calculated as wt% of PE in component $i$ × wt% of component $i$ in the film (i.e., weight fraction of PE in component $i$ × weight fraction of component $i$ in the film × 100); and density of $PE_i$ represents the density of PE in component $i$.

The overall PE weight content or total PE weight content in the film corresponds to the wt% of total PE in the film (PE contributed by all PE-containing components of the film, e.g., in a film with two PE-containing components, the weight of all PE present in the two components taken together divided by the total weight of the film, expressed as %), and may be conveniently calculated by the sum of the relative PE weight content in each of the components, such as with the formula:

$$\sum_{i=1}^{n} \text{wt\% PE}_i$$

wherein wt% $PE_i$ is as defined above.

For each of PE-comprising components present in the film, the ratio of their relative PE weight content in the film and the density of the PE is determined. The overall density is then obtained by dividing the overall PE weight content of the film (in wt%) by the sum of the ratios of the relative PE weight content in a film and the density of the PE in said component.

The calculation of the overall density based on the PE weight content only is further illustrated in Table 1, which represents a film comprising two different PEs ($PE_1$ and $PE_2$) and an additive that comprises a further PE ($PE_3$) as a carrier.

**Table 1. Artificial example showing the calculation of the overall density based on the PE weight content only in a PE-comprising film.**

| Components in film | Relative amount of the components in the film (wt%) | Relative amount of the PE in each component (wt%) | Relative amount of each PE in the total film (wt%) | Density of PE1, PE2, PE3 (g/cm$^3$) |
|---|---|---|---|---|
| $PE_1$ | 80 wt% | 100 wt% | 80 wt% | 0.902 |
| $PE_2$ | 15 wt% | 100 wt% | 15 wt% | 0.870 |
| Additive 1 comprising $PE_3$ | 5 wt% | 40 wt% | 2 wt% | 0.910 |
| **Overall density (g/cm$^3$)** based on the PE weight content only is then calculated using the formula: *(Overall PE content in wt% in the film)* / $\Sigma$ *(wt% of $PE_{1-3}$ / density of $PE_{1-3}$)* <br> For the example presented above, the overall density is then calculated as: <br> (80 wt% + 15 wt% + 2 wt%) / [(80 wt% / 0.902 g/cm$^3$) + (15 wt% / 0.870 g/cm$^3$) + (2 wt% / 0.910 g/cm$^3$)] <br> = 97 wt% / [(88.70 wt%/g/cm$^3$) + (17.20 wt%/g/cm$^3$) + (2.20 wt%/g/cm$^3$)] <br> = 97 wt% / (108.10 wt%/g/cm$^3$) <br> = 0.897 g/cm$^3$ | | | | |

The overall density of the stretch film as taught herein is thus below 0.907 g/cm$^3$, preferably below 0.905 g/cm$^3$. In some embodiments, the overall density of the stretch film as taught herein is between 0.860 g/cm$^3$ and 0.907 g/cm$^3$. In some embodiments, the overall density of the stretch film as taught herein may be between 0.865 g/cm$^3$ and 0.907 g/cm$^3$ or between 0.870 g/cm$^3$ and 0.907 g/cm$^3$; preferably between 0.875 g/cm$^3$ and 0.907 g/cm$^3$. Thus, for example, the stretch film according to the invention may have an overall density of 0.907 g/cm$^3$, 0.905 g/cm$^3$, 0.902 g/cm$^3$, 0.900 g/cm$^3$, 0.897 g/cm$^3$, 0.895 g/cm$^3$, 0.892 g/cm$^3$, 0.890 g/cm$^3$, 0.887 g/cm$^3$, 0.885 g/cm$^3$, 0.882 g/cm$^3$, 0.880 g/cm$^3$, 0.877 g/cm$^3$, or 0.875 g/cm$^3$, wherein the overall density is calculated based on the polyethylene content of the film.

In some embodiments, the overall density of the stretch film as taught herein is 0.902 g/cm$^3$ or less, wherein the overall density is calculated based on the polyethylene content of the film. In some embodiments, the overall density of the stretch film as taught herein is 0.860 g/cm$^3$ or more and 0.902 g/cm$^3$ or less. In some embodiments, the overall density of the stretch film as taught herein may be between 0.865 g/cm$^3$ and 0.902 g/cm$^3$ or between 0.870 g/cm$^3$ and 0.902 g/cm$^3$; preferably between 0.875 g/cm$^3$ and 0.902 g/cm$^3$, wherein the upper and lower margin values are included.

A skilled person will understand that to obtain a stretch film with a low overall density according to the invention, the polyethylene present in the film or at least a part of the polyethylene present in the film as taught herein is a polyethylene of low density or very low density, preferably a polyethylene with a density below 0.907 g/cm$^3$, more preferably a polyethylene with a density between 0.860 g/cm$^3$ and 0.905 g/cm$^3$, even more preferably a polyethylene with a density between 0.870 g/cm$^3$ and 0.905 g/cm$^3$.

In certain embodiments, the PE in the film as taught herein can be a combination of at least two different polyethylenes. In certain embodiments, the PE in the film as taught herein can be a combination of at least two different VLDPEs, or at least two different LLDPEs. In some embodiments, the PE in the film as taught herein can be a combination of at least one VLDPE, with at least one other PE selected from LDPE, LLDPE, VLDPE, MDPE or HDPE. In some embodiments, the PE in the film as taught herein can be a combination of at least one LLDPE with at least one other PE selected from VLDPE, LDPE, MDPE or HDPE.

The stretch film of the invention may further comprise components that are not PE, in particular the film may comprise between 0 wt% and 30 wt%, preferably between 0 wt% and 10 wt%, of non-PE components, such as for example, but not limited to, ethylene vinyl acetate, ethylene methyl acetate, ethylene butyl acetate, a cyclic polymer or styrene homo- or copolymers.

In certain embodiments, the film may comprise an ethylene vinyl acetate (EVA), ethylene methyl acetate (EMA), or ethylene butyl acetate (EBA). The terms EVA, EMA, or EBA typically refers to a copolymer of ethylene and vinyl acetate, a copolymer of ethylene and methyl acetate, and a copolymer of ethylene and butyl acetate. In some embodiments, the film may comprise between 0 wt% and 30 wt%, preferably between 0 wt% and 10 wt%, of EVA, EMA, or EBA.

In certain embodiments, the film may comprise a polypropylene (PP). In some embodiments, the film may comprise between 0 wt% and 10 wt% PP. In some embodiments, the film as taught herein may comprise between 0 wt% and 5 wt% PP.

In some embodiments, the film may further comprise a cyclic polymer, such as a cyclic olefin copolymer. In some embodiments, the film may comprise between 0 wt% and 30 wt%, preferably between 0 wt% and 20 wt%, preferably between 0 wt% and 10 wt% of a cyclic polymer.

In certain embodiments, the film may comprise a styrene homopolymer or a styrene copolymer. In some embodiments, the film may comprise between 0 wt% and 30 wt%, preferably between 0 wt% and 10 wt%, of a styrene homopolymer or styrene copolymer.

The non-oriented or mono-oriented multilayer stretch film as taught herein is characterized by a positive tensile stress-strain curve over the range of 0% to 20.0% strain, wherein said stress-strain curve is created based on 5.0% strain intervals, and wherein the stress is measured according to the ASTM D882-18 standard in the transverse direction of the film. In one practical approach, the film as taught herein has a stress-strain curve wherein at each incremental 5% strain point, the stress or force value is greater than the stress or force value corresponding to the previous 5% strain point. Hence, for example, wherein the stress or force value at 5%, 10%, 15%, and 20% strain is each greater than the stress or force value at, respectively, 0%, 5%, 10% and 15% strain. In certain examples, the film as taught herein may have a stress-strain curve wherein at each incremental strain point, wherein the increment is smaller than 5% strain, the stress or force value is greater than the stress or force value corresponding to the previous strain point. Hence, for example, when the increment is 2.5% strain, the stress or force value at 2.5%, 5.0%, 7.5%, 10.0%, 12.5%, 15.0%, 17.5%, and 20.0% strain is each greater than the stress or force value at, respectively, 0%, 2.5%, 5%, 7.5%, 10%, 12.5%, 15%, and 17.5% strain. In this approach, it is in principle not necessary to "fit" a curve to the stress-strain datapoints, as stress measurements at the defined datapoints can define the stress-strain curve as being positive in the stated strain interval. In certain cases, when applying a particular strain within the 0% to at least 20% strain interval to the film, the stress on the film is increased as compared to a any particular strain value that is lower that the applied strain value. In a further approach, the film as taught herein is characterized by a tensile stress-strain curve that has a positive first derivative over the range of 0% to 20.0% strain wherein said stress-strain curve is created based on 5.0% strain intervals. In such approach, the curve may be fitted for example using a suitable non-linear regression algorithm. The stress-strain curve may have a positive first derivative in the 0.0% to 20.0% strain range, even if the curve is fitted for example by taking stress measurements at smaller strain intervals, such as 1.0%, or 2.0% or 2.5%, or 3.0%, or 3.5% or 4.0%.

In some embodiments, the stretch film as taught herein has a positive stress-strain over the range of 0.0% to 30.0% strain, preferably of 0.0% to 40.0% strain, more preferably of 0.0% to 50.0% strain, wherein the stress-strain curve is created by using measurements at each 5.0% strain interval, and wherein the stress is measured according to the ASTM D882-18 standard in the transverse direction.

As used herein, the "stress-strain curve", sometimes also referred to as "force-extension curve" is the curve that is created by plotting the stress that is measured on a film on the Y-axis after applying a gradually increasing strain to the film, wherein said strain is plotted on the X-axis, wherein the stress (force) and the strain (extension) are measured/applied according to the ASTM D882-18 standard. The stress-strain curve thus represents the stress that is measured on a film (in the Y-axis) after applying a gradually increasing strain to the film, said strain being displayed in the X-axis. More specifically, as used herein, for the generation of the stress-strain curve, a gradually increasing strain (also referred to as deformation or extension) is applied to the film, whereafter the stress or force on the film is measured. In order to create the stress-strain curve, the applied strain is plotted on the X-axis in function of the corresponding stress on the Y-axis. The stress-strain curve can be created by plotting any number of datapoints above 2, preferably above 3, preferably above 4, preferably above 5, on the graph. Preferably, at least 5 datapoints are included in the stress-strain curve over the interval of 0% to 20% strain.

The stress-strain curve is thus created by using measurements of stress at a particular applied strain or deformation and according to the ASTM D882-18 standard but wherein the stress is measured in the transverse direction of the film. The ASTM D882-18 standard covers the determination of tensile properties of plastics in the form of thin sheeting and films that are less than 1.0 mm in thickness. The 15 mm wide strip of film is clamped between two clamps situated at a distance of 50 mm from each other and the film is subsequently stretched at a rate of 500 mm/min until the film breaks or tears. At least five specimens shall be tested from each sample. For each particular strain or deformation that is applied on the film, the stress on the film is measured and plotted on the Y-axis. In the present invention, the ASTM D882-12 standard is applied wherein the stress is measured in the transverse direction of the film.

The stretch film as taught herein is characterized in that it has a positive (or increasing) stress-strain curve over the range of 0.0% to 20.0% strain, wherein the stress-strain curve is created by values of the stress or force that is applied and that are plotted at each 5.0% strain interval. In some embodiments, the stress-strain curve can also be generated by plotting the stress that is measured at for example, each 2.5% strain interval, or at each 1.0% strain interval, and according to the ASTM D882-18 standard.

As used herein, a strain interval of a particular percentage indicates that at particular regular intervals of strain (e.g., 5.0%, 2.5%, 1.0%), the stress or force is measured and plotted on the Y-axis and a stress-strain curve is fitted to the measured and plotted values. It is preferred that to plot the stress-strain curve, the curve starts at 0% of strain.

In certain embodiments, the stretch film as taught herein can be stretched in the transverse direction as well as in the machine direction. The terms "machine direction" or "longitudinal direction" refer to the circumferential direction of a roll of film. The terms "transverse direction" or "transversal direction" refer to the direction perpendicular to the circumferential direction of a roll of film.

The stretch film as taught herein is characterized by a plastic deformation of maximum 15.0% as measured in the transverse direction, wherein the plastic deformation is measured according to the ASTM D5459-95 standard but in the transverse direction. In some embodiments, the stretch film as taught herein has a plastic deformation of maximum 12.0%, in particular maximum 10.0%, as measured in the transverse direction and according to the ASTM D5459-95 standard.

As used herein, "plastic deformation" or also called "permanent deformation" refers to the permanent increase in length, expressed as percentage of the original length, by which a viscoelastic material fails to return to its original length after being subjected to particular extensions, such as the extensions prescribed in the test procedure of an ASTM method, e.g. the ASTM D5459-95 standard method. The film as taught herein is characterized by a plastic deformation of maximum 15.0%, which indicates that in the ASTM D5459-95 test conditions, only a change of maximum 15.0% in original length of the film as measured in the transverse direction may take place.

The permanent or plastic deformation of the film of the invention is determined by a method based on an ASTM D5459 standard method, such as the ASTM D5459-95 standard method, but wherein he deformation is measured in the transverse direction. As used herein, at least five strips of 25.4 mm wide and 127 mm long are cut of the film sample perpendicular to the machine direction, which is in the transverse direction. Using a testing machine, the film strips are elongated at 127 mm/min to a strain or extension of 50% whereafter the testing machine is stopped; and the film is held for 60 seconds in the 50% extension position. The film is then allowed to go back to 0% strain at 127 mm/min and held at 0% strain during 3 minutes for recovery. After the recovery, the film is again stretched at 127 mm/min to 50% strain or extension and held in that position of 60 seconds, after which it is again allowed to go back to the 0% strain position. The permanent deformation is then calculated by the following formula use the differences in extension or strain as indicated in Figure 1:

$$Plastic\ deformation,\ \% = (AD/AE)\ x\ 100$$

The stress retention of the film can be calculated using the differences in load or stress as indicated in Figure 1:

$$Stress\ retention,\ \% = (GE/BE)\ x\ 100$$

In certain embodiments, the film as taught herein has a plastic deformation between 0.01% and 15.0% as measured according to the ASTM D5459-95 standard in the transverse direction. In some embodiment, the plastic deformation is between 0.01% and 12.0%, preferably between 0.01% and 10.0%.

In some embodiments, the film as taught herein has a plastic deformation of maximum 12.0% as measured according to the ASTM D5459-95 standard in the transverse direction. In some embodiments, the plastic deformation is between 0.01% and 12.0%.

In some embodiments, the film as taught herein has a plastic deformation of maximum 10.0% as measured according to the ASTM D5459-95 standard in the transverse direction. In some embodiments, the plastic deformation is between 0.01% and 10.0%.

For example, the film as taught herein may have a plastic deformation of about 1.0%; 2.0%; 3.0%; 4.0%; 5.0%; 6.0%, 7.0%, 8.0%, 9.0%, 10.0%, 11.0%, 12.0%, 13.0%, 14.0% or 15.0%, as measured according to the ASTM D5459-95 standard in the transverse direction.

In some embodiments, the film as taught herein has a stress retention of 75.0% or more. In further embodiments, the film as taught herein displays a stress retention of at least 77.0%, or even at least 80.0%.

The low overall density of the film as taught herein results in excellent impact resistance and tear resistance of the film of the invention. As used herein, "impact resistance" refers to the ability of the film to withstand sudden or intense force or shock. The impact resistance can be measured using the ASTM D1709-22 standard (Method A) and applying the free-falling dart method. In this test method, the film specimen is clamped securely in a pneumatic ring at the base of the drop tower. The mounting bracket is adjusted to the appropriate drop height, and the dart is inserted into the bracket. The dart is then released to drop onto the centre of the film specimen and the drop weight and test result (pass / fail) are recorded. As evidenced from the example part, the film specimen according to the invention all display a high impact resistance wherein they are able to withstand a falling dart of at least 300 g, preferably at least 500 g or even more. More specifically, the film specimen according to the invention all display a high impact resistance wherein they are able to withstand a falling dart of at least 700 g or even more.

Preferably, the film as taught herein comprises an impact resistance of at least 30 $g/\mu m$. In some further embodiments, the film as taught herein has an impact resistance of at least 31 $g/\mu m$, in particular at least 35 $g/\mu m$, more in particular at least 37 $g/\mu m$, even more in particular at least 40 $g/\mu m$.

As used herein, the term "tear resistance" can be determined according to the ASTM D1922-15 thereby using the Elmendorf tear test. The Elmendorf Tear testing method determines the force that is required on a film to continue the tearing of an initial cut in the film.

In certain embodiments, the film as taught herein may further comprise one or more additives, preferably one or more additives selected from group consisting of anti-blocking agents, anti-fogging agents, fillers, cling agents, anti-oxidants, slip agents, processing aids or pigments. As used herein, the term "additive" or "additives" refers to the non-polymeric or active components in the film. As used herein, when any polymeric carrier resin for the additives would be present, this resin is not taken into account in the definition of additive. In the context of the invention, the polymeric carrier resin is not limited to polyethylene.

In certain embodiments, the total weight of the one or more additives present in the film represents maximum 30.0 wt%, of the total weight the film.

In certain embodiments, the stretch film as taught herein comprises one or more anti-blocking agents. In some embodiments, the film as taught herein comprises from 0.01 wt% to 30.0 wt% of an anti-blocking agent relative to the total weight of the film. In further embodiments, the film as taught herein comprises from 0.05 wt% to 15.0 wt%, preferably from 0.10 wt% to 5.0 wt%, preferably from 0.10 wt% to 2.0 wt%, preferably from 0.20 wt% to 2.0 wt%, of an anti-blocking agent relative to the total weight of the film.

In certain embodiments, the stretch film as taught herein comprises one or more anti-fogging agents.

The presence of one or more anti-fogging agents in the stretch film of the invention is particularly useful in food applications, since it reduces the development of fog on the film, thereby ensuring that visual inspection of the food that is wrapped with the film of the invention is still possible.

In some embodiments, the film as taught herein comprises from 0.01 wt% to 30.0 wt% of an anti-fogging agent relative to the total weight of the film. In further embodiments, the film as taught herein comprises from 0.05 wt% to 15.0 wt%, preferably from 0.10 wt% to 5.0 wt%, preferably from 0.10 wt% to 2.0 wt%, preferably from 0.20 wt% to 2.0 wt%, of an anti-fogging agent relative to the total weight of the film.

In certain embodiments, the stretch film as taught herein comprises one or more fillers. In some embodiments, the fillers can be calcium carbonate ($CaCO_3$) or talc.

In some embodiments, the film as taught herein comprises from 0.01 wt% to 30.0 wt% of a filler relative to the total weight of the film. In further embodiments, the film as taught herein comprises from 0.05 wt% to 15.0 wt%, preferably from 0.10 wt% to 5.0 wt%, preferably from 0.10 wt% to 2.0 wt%, preferably from 0.20 wt% to 2.0 wt%, of a filler relative to the total weight of the film.

In certain embodiments, the film as taught herein may further comprise one or more pigments, such as titanium dioxide ($TiO_2$) and other colour pigments.

In some embodiments, the film as taught herein comprises from 0.01 wt% to 30.0 wt% of a pigment relative to the total weight of the film. In further embodiments, the film as taught herein comprises from 0.05 wt% to 15.0 wt%, preferably from 0.10 wt% to 5.0 wt%, preferably from 0.10 wt% to 2.0 wt%, preferably from 0.20 wt% to 2.0 wt%, of a pigment relative to the total weight of the film.

In some embodiments, the stretch film as taught herein does not comprise a cross-linking agent. In some embodiments, the polyethylene in the film is not cross-linked.

In certain embodiments, the film as taught herein has an average thickness that is at most 100 $\mu$m, preferably at most 50.0 $\mu$m, more preferably at most 40.0 $\mu$m, more preferably at most 30.0 $\mu$m, wherein the thickness is measured according to ISO 4593.

In certain embodiments, the film as taught herein has an average thickness that is at most 20.0 $\mu$m, at most 17.50 $\mu$m, at most 15.0 $\mu$m, wherein the thickness is measured according to ISO 4593. For instance, the film as taught herein has a thickness of at most 20.0 $\mu$m, 19.5 $\mu$m, 19.0 $\mu$m, 18.5 $\mu$m, 18.0 $\mu$m, 17.5 $\mu$m, 17.0 $\mu$m, 16.5 $\mu$m, 16.5 $\mu$m, 15.5 $\mu$m, 15.0 $\mu$m.

In certain embodiments, the film as taught herein has an average thickness from 5.0 $\mu$m to 50.0 $\mu$m, preferably a thickness from 5.0 $\mu$m to 30.0 $\mu$m, preferably from 5.0 $\mu$m to 20.0 $\mu$m, more preferably from 6.0 $\mu$m to 20.0 $\mu$m wherein the thickness is measured according to ISO 4593.

It is noted that thickness expressed in $\mu$m is rounded to the nearest value having one decimal place.

For example, 28.11 $\mu$m, 28.12 $\mu$m, 28.13 $\mu$m, and 28.14 $\mu$m is rounded down to 28.1 $\mu$m, while 28.15 $\mu$m, 28.16 $\mu$m, 28.17 $\mu$m, 28.18 $\mu$m, and 28.19 $\mu$m is rounded up to 28.2 $\mu$m. Reference to a thickness value not followed by any decimal place also particularly comprises that same value followed by 0 at the first decimal place, e.g. 25 $\mu$m particularly encompasses 25.0 $\mu$m.

In certain embodiments, the film as taught herein has an average thickness from 5.0 $\mu$m to 20.0 $\mu$m; preferably from 5.0 $\mu$m to 19.0 $\mu$m; preferably from 5.0 $\mu$m to 18.0 $\mu$m; preferably from 5.0 $\mu$m to 17.0 $\mu$m; preferably from 5.0 $\mu$m to 16.0 $\mu$m; or preferably from 5.0 $\mu$m to 15.0 $\mu$m.

In certain embodiments, the film as taught herein has an average thickness from 5.5 $\mu$m to 20.0 $\mu$m; preferably from 5.5 $\mu$m to 19.0 $\mu$m; preferably from 5.5 $\mu$m to 18.0 $\mu$m; preferably from 5.5 $\mu$m to 17.0 $\mu$m; preferably from 5.5 $\mu$m to 16.0 $\mu$m; or preferably from 5.5 $\mu$m to 15.0 $\mu$m.

In certain embodiments, the film as taught herein has an average thickness from 6.0 $\mu$m to 20.0 $\mu$m; preferably from 6.0 $\mu$m to 19.0 $\mu$m; preferably from 6.0 $\mu$m to 18.0 $\mu$m; preferably from 6.0 $\mu$m to 17.0 $\mu$m; preferably from 6.0 $\mu$m to 16.0 $\mu$m; or preferably from 6.0 $\mu$m to 15.0 $\mu$m.

In certain embodiments, the film as taught herein has an average thickness from 6.0 $\mu$m to 20.0 $\mu$m; preferably from 6.0 $\mu$m to 19.0 $\mu$m; preferably from 6.0 $\mu$m to 18.0 $\mu$m; preferably from 6.0 $\mu$m to 17.0 $\mu$m; preferably from 6.0 $\mu$m to 16.0 $\mu$m; or preferably from 6.0 $\mu$m to 15.0 $\mu$m.

Such thickness allows to provide a film that can easily overwrap food trays or food products, and that less material is needed, which provides both economic and environmental benefits.

The film as taught herein is a non-oriented or mono-oriented multilayer stretch film. In some embodiments, the film as taught herein comprises two layers. In certain embodiments, in a film comprising two layers, the thickness of each of the layers varies between 0.5 % to 99.5 % of the total thickness of the film. In some embodiments, the film as taught herein comprises two layers wherein the film comprises at least 70 wt% PE relative to the total weight of the film and wherein the film is characterized by an overall density below 0.907 g/cm³, wherein the overall density is calculated based on the polyethylene weight content of the film, a positive tensile stress-strain curve over the range of 0% to 20.0% strain, wherein the stress is measured according to the ASTM D882-18 standard in the transverse direction of the film; and a plastic deformation of maximum 15.0% as measured in the transverse direction, wherein the plastic deformation is measured according to the ASTM D5459-95 standard.

In certain embodiments, the film as taught herein is a multilayer comprising at least one core layer and two outer layers, wherein the at least one core layer is arranged between the two outer layers.

In some embodiments, the film as taught herein comprises three or more layers. In certain embodiments, in a film comprising three or more layers, the thickness of each of the layers varies between 1 % to 98 % of the total thickness of the film. In some embodiments, the film as taught herein comprises three or more layers wherein the film comprises at least 70 wt% PE relative to the total weight of the film and wherein the film is characterized by an overall density below 0.907 g/cm³, wherein the overall density is calculated based on the polyethylene weight content of the film, a positive tensile stress-strain curve over the range of 0% to 20.0% strain, wherein the stress is measured according to the ASTM D882-18 standard in the transverse direction of the film; and a plastic deformation of maximum 15.0% as measured in the transverse direction, wherein the plastic deformation is measured according to the ASTM D5459-95 standard.

As used herein, the term "outer layer", also referred to a "skin layer" or "exterior layer" refers to a layer of the film that is located on the outside of the film. The outer layer can be located on each outside of the film.

As taught herein, the film is a multilayer, wherein the layers that are located on the outside of the film are the outer layers. For instance, when the film is a multilayer of only two layers, both layers are outer layers. When the film is a multilayer comprising three layers, the first and second outer layers are those layers that are located on the outside of the film. In between said two outer layers, a core layer is then located.

In certain embodiments, the film as taught herein may comprise at least 3 layers. In certain embodiments, the film may comprise at least 4 layers, at least 5 layers, at least 6 layers, at least 7 layers, at least 8 layers, or at least 9 layers. For example, the film may comprise three, four, five, seven, nine or more layers, such as eleven or thirteen layers. In a certain embodiment, the film may comprise more than 13 layers.

In certain embodiments, the film as taught herein may comprise a first outer layer, a second outer layer and at least one core layer that is arranged between the two outer layers. In certain embodiments, the film as taught herein may thus comprise precisely three layers: a first outer layer, a second outer layer and a core layer that is arranged between the two outer layers. In certain embodiments, the film as taught herein may comprise precisely four layers: a first outer layer, a second outer layer, a first core layer and a second core layer, wherein the two core layers are arranged between the two outer layers. In certain embodiments, the film as taught herein may comprise precisely five layers: a first outer layer, a second outer layer, a first core layer, a second core layer, and a third core layer, wherein the three core layers are arranged between the two outer layers.

In certain embodiments, in a film comprising at least 3 layers, the thickness of each of the outer layers independently varies between 1.0% to 98.0% of the total thickness of the stretch film. In some preferred embodiments, the thickness of each of the outer layers independently varies between 1.0% and 49.0%. In certain embodiments, the thickness of each of the outer layers independently varies between 5.0% to 45.0% of the total thickness of the film. In certain embodiments, the thickness of the two outer layers each independently is from 1.0% to 49.0%, preferably from 5.0% to 45.0%, of the total thickness of the film as taught herein. For instance, each of the outer layer independently may have a thickness of 5.0%, 10.0%, 15.0%, 20.0%, 25.0%, 30.0%, 35.0%, 40.0%, or 45.0% of the total thickness of the film as taught herein.

In certain embodiments, the overall thickness of the at least one core layer is between 98.0% to 1.0%, preferably from 90.0% to 5.0% of the total thickness of the film. In certain embodiments, when only one core layer is present in the film, the thickness of the core layer is between 98.0% to 1.0%, preferably from 90.0% to 5.0% of the total thickness of the film. In certain embodiments, when more than one core layer is present in the film, the overall thickness of the core layer is the total sum of thicknesses of each of the core layers. In said embodiments, the sum of the thicknesses of each of the core layers is between 98.0% to 1.0%, preferably from 90.0% to 5.0% of the total thickness of the film. For example, the overall thickness of the at least one core layer may be 5.0%, 10.0%, 15.0%, 20.0%, 25.0%, 30.0%, 35.0%, 40.0%, 45.0%, 50.0%, 55.0%, 60.0%, 65.0%, 70.0%, 75.0%, 80.0%, 85.0%, or 90.0% of the total thickness of the film as taught herein.

In some embodiments, when the film is a multilayer comprising at least one core layer and two outer layers, the thickness of each of the outer layers is the same, which ensures equal distribution and an equal rate of migration of surface-modifying additives, such as anti-fog agents, to both of the outer layers.

In certain embodiments, the thickness of the layers (e.g. core layer(s), outer layers) may vary. In certain embodiments, the thickness of each of the outer skin layers is smaller than the thickness of the core layer or the sum of the thicknesses of the at least two core layers. This layer configuration allows the optimization of the distribution and the rate of migration of surface-modifying additives, such as anti-fog agents, to each of the outer layers independently.

For example, a three-layer film as taught herein may have a film structure of A/B/C for the first outer layer/core layer/second outer layer. The layer configuration and corresponding layer thicknesses may be 33%(A)/34%(B)/33%(C), 25%(A)/50%(B)/25%(C), 20%(A)/60%(B)/20%(C), 15%(A)/70%(B)/15%(C), 10%(A)/75%(B)/15%(C), 10%(A)/80% (B)/10%(C), 5%(A)/90%(B)/5%(C), wherein the percentages are the relative thickness of each layer relative to the total thickness of the film. For example, a five-layer film as taught herein may have a film structure of A/B/C/D/E for the first outer layer/first core layer/second core layer/third core layer/second outer layer. The layer configuration may be dependent on the die design and extruder sizes. The layer configuration can be easily adapted as known by the person skilled in the art.

In certain embodiments, the film as taught herein may be a film comprising three layers: a first outer layer (or first skin layer), a core layer, a second outer layer (or second skin layer), wherein the core layer is arranged between the first and second outer layer.

In some embodiments, the stretch film comprises at least two layers, such as precisely two layers, three layers, four layers, five layers or even more than five layers. In some embodiments, the film comprises precisely two layers, in particular a first outer layer and a second outer layer.

In some embodiments, the stretch film comprises at least three layers. In an embodiment, the film comprises precisely three layers, such as a first outer layer, a core layer, and a second layer, wherein the core layer is located between the first and second layer.

In some embodiments, the film as taught herein can thus be a multilayer, such as for example a multilayer comprising 2, 3 or 5 layers. It will be clear for the skilled person that each layer in a multilayer film can comprise any amount of PE, as long as the film in total comprises at least 70 wt% polyethylene relative to the total weight of the film.

The film as taught herein is a multilayer, such as for example a multiplayer comprising 2, 3 or 5 layers. It will be clear for the skilled person that each layer in the multilayer can display any density, as long as the overall density of the total film is below 0.907 g/cm$^3$, wherein the overall density is calculated based on the polyethylene weight content of the film. In some embodiments, each layer in the multilayer displays a density between 0.860 g/cm$^3$ and 0.960 g/cm$^3$, as long as the overall density of the total film is below 0.907 g/cm$^3$.

In certain embodiments when the film is a multilayer film comprising one or more core layers and the PE weight content of said one or more core layers is at least 50 wt% of the total PE weight content of the film, the overall density of said one or more core layers is maximum 0.960 g/cm$^3$. In certain embodiments when the film is a multilayer film comprising one or more core layers and the PE weight content of said one or more core layers is at least 60 wt% of the total PE weight content of the film, the overall density of said one or more core layers is maximum 0.938 g/cm$^3$. In certain embodiments when the film is a multilayer film comprising one or more core layers and the PE weight content of said one or more core layers is at least 70 wt% of the total PE weight content of the film, the overall density of said one or more core layers is maximum 0.927 g/cm$^3$. In certain embodiments when the film is a multilayer film comprising one or more core layers and the PE weight content of said one or more core layers is at least 80 wt% of the total PE weight content of the film, the overall density of said one or more core layers is maximum 0.919 g/cm$^3$. In certain embodiments when the film is a multilayer film comprising one or more core layers and the PE weight content of said one or more core layers is at least 90 wt% of the total PE weight content of the film, the overall density of said one or more core layers is maximum 0.912 g/cm$^3$.

In certain embodiments, the stretch film as taught herein is an extruded film, in particular an extruded blown film or an extruded cast film.

In some embodiments, the film is an extruded blown film. As used herein, the term "extruded blown film" refers to a film that is produced by means of blown film extrusion.

The term "blown film extrusion" as used herein refers to a process in which polymer granules are melted and forced into a typically annular die to yield a weak semi-solid bubble, the diameter of which is rapidly expanded via air pressure, and the bubble is drawn upwards with rollers, stretching the plastic in both the transverse and draw directions. The drawing and blowing cause the film to be thinner than the extruded tube that left the die gap, and also preferentially aligns the polymer molecular chains in the direction that encounters the most plastic strain.

In some embodiments, the film is an extruded cast film. As used herein, the term "extruded cast film" refers to a film that is produced by means of cast film extrusion.

The term "cast film extrusion" as used herein refers to a plastic manufacturing process wherein plastic resins are melted and pushed through a slit die into films or sheets, cooled down, and then wound up to the final roll products. More specific, in cast film extrusion a slit die is employed to extrude a fine melt film onto a highly polished, high speed chill roll. The melt is pinned to the surface of the chill roll by either the pressure from an air knife or a vacuum box located close to the roll. This causes the film to be rapidly quenched, which improves its mechanical properties and clarity. The film then travels through a further series of chill, polishing and nip rolls, which help to draw the film down to the correct thickness, before its edges are trimmed and it is wound onto a drum for storage.

In some embodiments, the film as taught herein can be a multilayer, wherein the multilayer film is produced using co-extrusion wherein the components of each layers are extruded with multiple extruders followed by building up each layer of the film.

In certain embodiments, the stretch film as taught herein is suitable for use in food packaging applications, in particular suitable for use in overwrapping food trays.

A further aspect of the invention relates to the use of the film as taught herein for food packaging, in particular for overwrapping a food tray.

Accordingly, a further aspect relates to the use of a stretch film for food packaging, in particular for overwrapping a food tray, wherein the film comprises at least 70 wt%, preferably at least 90 wt%, polyethylene relative to the total weight of the film, the film further characterized by an overall density below 0.907 g/cm$^3$, wherein the overall density is calculated based on the polyethylene content of the film, a tensile stress-strain curve that has a positive first derivative over the range of 0% to 20.0% strain, wherein the stress-strain curve is created using measurements of stress at each 5.0% strain interval, and wherein the stress is measured according to ASTM D882-18 standard in the transverse direction of the film, and a plastic deformation of maximum 15.0% as measured in the transverse direction, wherein the plastic deformation is measured according to the ASTM D5459-95 standard.

A further aspect relates to a food tray that is overwrapped with the stretch film as taught herein, in particular wherein the food tray comprises a food product.

The phrase "overwrapping a food tray" or "wrapping a food tray" refers to applying a stretch film under tension over a food tray. Preferably the food tray comprises a food product.

The term "food tray" refers to any tray that is suitable for the package, storage and/or transportation of food.

In certain embodiments, the food as used herein is fresh food, such as fresh fruits, fresh vegetables, fresh meat, fresh fish, fresh cheese.

In certain embodiments the food as used herein can be prepared or processed, such as by cooking, steaming or any other food preparation method.

In certain embodiments, the food and food tray as used herein are intended to be stored at any temperature. In some embodiments, the food and food tray as used herein are intended to be stored at room temperature. In some embodiments, the food and food tray as used herein are intended to be refrigerated or frozen, such as for example stored at 4°C or at -20°C.

A related aspect of the invention is a method of overwrapping a food tray with a non-oriented or mono-oriented multilayer stretch film as taught herein. Said method comprises: providing a food tray to a wrapping unit, providing a stretch film as taught herein to a stretching unit, generally stretching the stretch film as taught herein in the transverse direction in the stretching unit, applying the stretch film on the food tray in the wrapping unit, sealing the edges of the stretch film to the food tray. When stretching the film, a length or a portion of the film will be stretched and that length or portion will be wrapped around the tray. The skilled person understands that said length or portion of the film will depend on the size of the food tray. In some embodiments, the method further comprises a cutting step wherein part of the film that is applied to the food try is cut off from the rest of the film.

It is apparent that there have been provided in accordance with the invention products, methods, and uses, that provide for substantial advantages as set forth above. While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations as follows in the appended claims.

The above aspects and embodiments are further supported by the following non-limiting examples.

## EXAMPLES

**Materials and Methods**

Materials

LLDPE AFFINITY PL1850G: Melt Flow Index (MFI) = 3.0; density = 0.902 g/cm$^3$;
VLDPE AFFINITY EG 8200G: MFI = 5.0; density = 0.870 g/cm$^3$;
LLDPE AFFINITY EG8100 MFI = 1.0; density = 0.870 g/cm$^3$;
LDPE AGILITY 1001: MFI = 0.65; density = 0.920 g/cm$^3$;
LLDPE DOWLEX GM 8490: MFI = 3.5; density = 0.916 g/cm$^3$;
VLDPE DOW ELITE AT 6507: MFI = 0.85; density = 0.902 g/cm$^3$.

Masterbatches

Anti-fogging agent: TOSAF AF7380PE
Anti-blocking agent: M65
Processing additives for PE: AMF 705HF

Prior art films:

Two films already available in the prior art are used in comparison with the different films according to the invention disclosed in the Examples 1-6.

A first prior art film comprises between 75 wt% and 100 wt% polyethylene and comprises between 0 wt% and 25 wt% of non-polyethylene components, in particular polypropylene. The overall density of the prior art film, calculated based on the PE content of the film, is 0.910 g/cm$^3$.

A second prior art film is a polyvinylchloride (PVC) film, comprising 70 wt% of PVC and about 30 wt% of a plasticizer.

Methods

Tests have been conducted to evaluate plastic deformation and elastic recovery of the films according to the ASTM D5459-95 standard. More specifically, the permanent or plastic deformation of the film specimen is measured using a slightly modify ASTM D5459-95 method wherein the stress is measured in the transverse direction of the film instead of the machine direction. At least 5 strips of each film type of 25.4 mm wide and 127 mm long are cut of the film sample wherein they are cut perpendicular to the machine direction. Using a testing machine, the film strips are elongated at a rate of 127 mm/min to a strain or extension of 50% whereafter the testing machine is stopped and the film is held for 60 seconds in the 50% extension position (primary stretching phase). The film is then allowed to go back to 0% strain at a rate of 127 mm/min and held there for 3 minutes for recovery. After the recovery, the film is stretched again at a rate of 127 mm/min to 50% strain or extension and held in that position for 60 seconds, after which it is again allowed to go back to the 0% strain position (secondary stretching phase). A schematic representation of the test is provided in Figure 1. The permanent deformation is calculated with the following formula: Plastic deformation (%) = (AD/AE) x 100 (Figure 1). The stress retention of the film is calculated with the formula: Stress retention, % = (GE/BE) x 100 (Figure 1).

In order to measure the tensile properties of the film specimen, the film specimen are tested according to ASTM D882-18 standard. The ASTM D882-18 standard covers the determination of the tensile properties in the form of thin sheeting and films that are less than 1.0 mm in thickness. The 15 mm wide strip of film is clamped between two clamps situated at a distance of 50 mm from each other and the film is subsequently stretched at a rate of 500 mm/min until the film breaks or tears. At least 5 specimen (and generally 8-9 specimen) per film type are tested. For each particular strain or deformation (in %) that is applied on the film, the corresponding stress (in N) on the film is measured. The stress-strain curve is then created by plotting the strain on the X-axis versus the stress on the Y-axis. In examples 1-8, the stress-strain curves have been created by plotting the strain values at each 5% interval on the X-axis versus the corresponding stress value on the Y-axis, and by connecting each of the points to generate the curve.

Results

Example **1**

A non-oriented stretch three-layer cast film according to an embodiment of the invention (Film 1) was prepared. The composition and structure of Film 1 is provided in Table 2.

The average thickness of the film on the roll was 10 μm as determined according to ISO 4593.

Figure 2 represents the stress-strain curve of eight specimens of Film 1. Values for tear resistance, impact resistance, permanent deformation and stress retention of Film 1 are displayed in Table 8.

**Table 2: Composition and structure of Film 1 according to an embodiment of the invention**

| Layer distribution (%) | Layer | Raw material | Wt% per layer* | Average Thickness per layer (μm) | Density per layer (g/cm³) | Overall density (g/cm³)** |
|---|---|---|---|---|---|---|
| *First outer layer* | | | | | | |
| 10.0% | A | Affinity PL1850G | 98.0 | 1.86 | 0.902 | |
| | A | M65 | 2.0 | | | |
| *Core layer* | | | | | | 0.890 |
| 80.0% | B | Affinity PL1850G | 47.5 | 14.88 | 0.887 | |
| | B | Affinity EG8200G | 47.5 | | | |
| | B | AF7380PE | 5.0 | | | |
| *Second outer layer* | | | | | | |
| 10.0% | C | Affinity PL1850G | 98.0 | 1.86 | 0.902 | |
| | C | M65 | 2.0 | | | |
| *When indicating the percentage per layer, the percentage is % by weight (wt%) compared with the total weight of each layer.* | | | | | | |
| *When indicating the overall density, the density is calculated based all PE weight content in the film.* | | | | | | |

**Example 2**

A non-oriented stretch three-layer cast film according to an embodiment of the invention (Film 2) was prepared.

The composition and structure of Film 2 is provided in Table 3.

The average thickness of the film on the roll was 16.7 μm as determined by according to ISO 4593.

Figure 3 represents the stress-strain curve of eight specimens of Film 2. Values for tear resistance, impact resistance, permanent deformation and stress retention of Film 2 are displayed in Table 8.

**Table 3: Composition and structure of Film 3 according to an embodiment of the invention**

| Layer distribution (%) | Layer | Raw material | Wt% per layer* | Thickness per layer ($\mu$m) | Density per layer (g/cm$^3$) | Overall density (g/cm$^3$)** |
|---|---|---|---|---|---|---|
| *First outer layer* | | | | | | |
| 10.0% | A | Affinity PL1850G | 98.0 | 1.67 | 0.902 | 0.903 |
| | A | M65 | 2.0 | | | |
| *Core layer* | | | | | | |
| 80.0% | B | Affinity PL1850G | 95.0 | 13.36 | 0.903 | |
| | B | AF73080PE | 5.0 | | | |
| *Second outer layer* | | | | | | |
| 10.0% | C | Affinity PL1850G | 98.0 | 1.67 | 0.902 | |
| | C | M65 | 2.0 | | | |
| *When indicating the percentage per layer, the percentage is % by weight (wt%) compared with the total weight of each layer.* **When indicating the overall density, the density is calculated based all PE weight content in the film.* | | | | | | |

## Example 3

A non-oriented stretch three-layer cast film according to an embodiment of the invention (Film 3) was prepared. The composition and structure of Film 3 is provided in Table 4.

The average thickness of the film on the roll was 11.2 $\mu$m as determined by according to ISO 4593.

Figure 4 represents the stress-strain curve of eight specimens of Film 3. Values for tear resistance, impact resistance, permanent deformation and stress retention of Film 3 are displayed in Table 8.

**Table 4: Composition and structure of Film 4 according to an embodiment of the invention**

| Layer distribution (%) | Layer | Raw material | Wt% per layer* | Thickness per layer ($\mu$m) | Density per layer (g/cm$^3$) | Overall density (g/cm$^3$)** |
|---|---|---|---|---|---|---|
| *First outer layer* | | | | | | |
| 10.0% | A | Affinity PL1850G | 98.5 | 1.2 | 0.902 | 0.893 |
| | A | AB7644 | 1.5 | | | |
| *Core layer* | | | | | | |
| 80.0% | B | Affinity PL1850G | 48.0 | 9.6 | 0.890 | |
| | B | Affinity EG8200G | 40.0 | | | |
| | B | Agility 1001 | 3.0 | | | |
| | B | AF73080PE | 9.0 | | | |
| *Second outer layer* | | | | | | |
| 10.0% | C | Affinity PL1850G | 98.5 | 1.2 | 0.902 | |
| | C | AB7644 | 1.5 | | | |
| *When indicating the percentage per layer, the percentage is % by weight compared with the total weight of each layer.* **When indicating the overall density, the density is calculated based all PE weight content in the film.* | | | | | | |

### Example 4

A non-oriented stretch three-layer blown film according to an embodiment of the invention (Film 4) was prepared. The composition and structure of Film 4 is provided in Table 5.

The average thickness of the film on the roll was 14.0 $\mu$m as determined by according to ISO 4593.

Figure 5 represents the stress-strain curve of eight specimens of Film 4. Values for tear resistance, impact resistance, permanent deformation and stress retention of Film 4 are displayed in Table 8.

**Table 5: Composition and structure of Film 6 according to an embodiment of the invention**

| Layer distribution (%) | Layer | Raw material | Wt% per layer* | Thickness per layer ($\mu$m) | Density per layer (g/cm$^3$) | Overall density (g/cm$^3$)** |
|---|---|---|---|---|---|---|
| *First outer layer* | | | | | | |
| 10.0% | A | Elite AT6507 | 97.5 | 1.2 | 0.902 | 0.893 |
| | A | M65 | 1.5 | | | |
| | A | AMF705HF | 1.0 | | | |
| *Core layer* | | | | | | |
| 80.0% | B | Elite AT6507 | 50.0 | 9.6 | 0.890 | |
| | B | Affinity EG8100G | 40.0 | | | |
| | B | AF7380PE | 10.0 | | | |
| *Second outer layer* | | | | | | |
| 10.0% | C | Elite AT6507 | 97.5 | 1.2 | 0.902 | |
| | C | M65 | 1.5 | | | |
| | C | AMF705HF | 1.0 | | | |
| *\*When indicating the percentage per layer, the percentage is % by weight (wt%) compared with the total weight of each layer.* *\*\*When indicating the overall density, the density is calculated based all PE weight content in the film.* | | | | | | |

### Example 5

A non-oriented stretch three-layer blown film according to an embodiment of the invention (Film 5) was prepared. The composition and structure of Film 5 is provided in Table 6.

The thickness of the film on the roll was 18.6 $\mu$m as determined by according to ISO 4593.

Figure 6 represents the stress-strain curve of eight specimens of Film 5. Values for tear resistance, impact resistance, permanent deformation and stress retention of Film 5 are displayed in Table 8.

**Table 6: Composition and structure of Film 7 according to an embodiment of the invention.**

| Layer distribution (%) | Layer | Raw material | Wt% per layer* | Thickness per layer ($\mu$m) | Density per layer (g/cm$^3$) | Overall density (g/cm$^3$) |
|---|---|---|---|---|---|---|
| *First outer layer* | | | | | | |
| 10.0% | A | Elite AT6507 | 98.0 | 1.0 | 0.902 | 0.878 |
| | A | AB7644 | 2.0 | | | |
| *Core layer* | | | | | | |
| 80.0% | B | Affinity EG8100G | 95.0 | 8.0 | 0.872 | |
| | B | AF7380PE | 5.0 | | | |
| *Second outer layer* | | | | | | |

(continued)

| Layer distribution (%) | Layer | Raw material | Wt% per layer* | Thickness per layer (μm) | Density per layer (g/cm³) | Overall density (g/cm³) |
|---|---|---|---|---|---|---|
| 10.0% | C | Elite AT6507 | 98.0 | 1.0 | 0.902 | |
| | C | AB7644 | 2.0 | | | |
| *When indicating the percentage per layer, the percentage is % by weight (wt%) compared with the total weight of each layer. **When indicating the overall density, the density is calculated based all PE weight content in the film. | | | | | | |

**Example 6**

A non-oriented stretch three-layer blown film according to an embodiment of the invention (Film 6) was prepared. The composition and structure of Film 6 is provided in Table 7.

The thickness of the film on the roll was 16.8 μm as determined by according to ISO 4593.

Figure 7 represents the stress-strain curve of eight specimens of Film 6. Values for tear resistance, impact resistance, permanent deformation and stress retention of Film 6 are displayed in Table 8.

**Table 7: Composition and structure of Film 8 according to an embodiment of the invention**

| Layer distribution (%) | Layer | Raw material | Wt% per layer* | Thickness per layer (μm) | Density per layer (g/cm³) | Overall density (g/cm³)** |
|---|---|---|---|---|---|---|
| *First outer layer* | | | | | | |
| 10.0% | A | Elite AT6507 | 98.0 | 1.0 | 0.902 | |
| | A | M65 | 2.0 | | | |
| *Core layer* | | | | | | 0.894 |
| 80.0% | B | Elite AT6507 | 63.0 | 8.0 | 0.892 | |
| | B | Affinity EG8100G | 32.0 | | | |
| | B | AF7380PE | 5.0 | | | |
| *Second outer layer* | | | | | | |
| 10.0% | C | Elite AT6507 | 98.0 | 1.0 | 0.902 | |
| | C | M65 | 2.0 | | | |
| *When indicating the percentage per layer, the percentage is % by weight (wt%) compared with the total weight of each layer. **When indicating the overall density, the density is calculated based all PE weight content in the film. | | | | | | |

**Example 7 (comparative examples)**

Two prior art films are used in comparison with the different films according to certain embodiments of the invention disclosed in the Examples 1-6. The first prior art film (Film 7) comprises between 75 wt% and 90 wt% polyethylene as a combination of VLDPE, LLDPE and LDPE, and between 10 wt% and 25 wt% of non-polyethylene components, in particular polypropylene. The overall density of the prior art film (Film 7), calculated based on the PE weight content of the film, is 0.910 g/cm³.

Figure 8 represents the stress-strain curve of eight specimens of the prior art film (Film 7). Values for tear resistance, impact resistance, permanent deformation and stress retention of the prior art film are displayed in Table 8.

The second film comprises 70 wt% polyvinylchloride and about 30 wt% plasticizer (Film 8). The overall density of this prior art film is 1.25 g/cm³.

Figure 9 represents the stress-strain curve of specimen of the PVC containing prior art film (Film 8). Values for tear resistance, impact resistance, permanent deformation and stress retention of the film 8 are displayed in Table 8.

**Table 8. Tensile properties of the different film types according to certain embodiments of the invention and of the comparative example. For each of the film types, the average values are represented from 5 specimen.**

| Film type | Tear Resistance Sheet Force machine direction (MD) (N) | Tear resistance Sheet Force transverse direction (TD) (N) | Impact Resistance (g) | Impact Resistance (g/$\mu$m) | Permanent deformation (%) | Stress retention (%) |
|---|---|---|---|---|---|---|
| Film 1 | 0.09 | 0.50 | >770 | >85.6 | 4.6 | 86.6 |
| Film 2 | 0.58 | 3.17 | >770 | >46.1 | 3.9 | 86.8 |
| Film 3 | 0.47 | 1.89 | >770 | >68.8 | 4.0 | 85.6 |
| Film 4 | 0.26 | 1.92 | >770 | >56.6 | 3.9 | 81.6 |
| Film 5 | 0.21 | 1.27 | >770 | >41.4 | 3.5 | 86.7 |
| Film 6 | 0.34 | 1.22 | 750 | 44.6 | 4.5 | 85.1 |
| Film 7 (prior art) | 0.80 | 4.53 | 138 | 8.3 | 15.2 | 73.8 |
| Film 8 (PVC) | 0.16 | 0.31 | 240 | 27.0 | 6.7 | 47.6 |

**Claims**

1. A non-oriented or mono-oriented multilayer stretch film comprising at least 70 wt% polyethylene relative to the total weight of the film, the film **characterized by**:

   - an overall density below 0.907 g/cm$^3$, wherein the overall density is calculated based on the polyethylene weight content of the film;
   - a positive tensile stress-strain curve over the range of 0 to 20.0% strain, wherein the stress-strain curve is created by measurements of stress at each 5.0% strain interval and wherein the stress is measured according to the ASTM D882-18 standard in the transverse direction of the film; and
   - a plastic deformation of maximum 15.0% as measured in the transverse direction, wherein the plastic deformation is measured according to the ASTM D5459-95 standard.

2. The film according to claim 1 comprising at least 90 wt% polyethylene relative to the total weight of the film.

3. The film according to claim 1 or 2 comprising an overall density below 0.905 g/cm$^3$; preferably an overall density of 0.902 g/cm$^3$ or less; wherein the overall density is calculated based on the polyethylene content of the film.

4. The film according to any one of claims 1 to 3 wherein the film comprises a positive tensile stress-strain curve over the range of 0.0% to at least 50.0% strain, wherein the stress-strain curve is created by measurements of stress at each 5.0% strain interval, and wherein the stress is measured according to the ASTM D882-18 standard in the transverse direction of the film.

5. The film according to any one of the claims 1 to 4, wherein the film comprises at least one core layer arranged between two outer layers.

6. The film according to claim 5 wherein the overall thickness of the at least one core layer is from 5.0% to 90.0% of the total thickness of the film.

7. The film according to claim 5 or 6 wherein the thickness of the two outer layers each independently is from 5.0% to 47.5% of the total thickness of the flexible film.

8. The film according to any one of claims 1 to 7 wherein the polyethylene is at least a copolymer of ethylene and at least one alpha-olefin, preferably at least one $C_3$-$C_8$ alpha-olefin, more preferably at least one $C_4$-$C_8$ alpha-olefin, even more preferably at least one $C_6$-$C_8$ alpha-olefin.

9. The film according to any one of claims 1 to 8 wherein the polyethylene is a copolymer of ethylene and $C_6$ alpha-olefin or a copolymer of ethylene and $C_8$ alpha-olefin, or a combination of a copolymer of ethylene and $C_6$ alpha-olefin with a copolymer of ethylene and $C_8$ alpha-olefin.

10. The film according to any one of claims 1 to 9 wherein the film is an extruded blown film or an extruded cast film; preferably an extruded cast film.

11. The film according to any one of claims 1 to 10, wherein the mono-oriented multilayer stretch film is oriented in either the machine direction or in the transverse direction.

12. The film according to any one of claims 1 to 11, which is suitable for use in food packaging applications, in particular suitable for use in overwrapping food trays.

13. Use of a film according to any one of claims 1 to 12 for food packaging, in particular for overwrapping a food tray.

14. A food tray that is overwrapped with the film according to any one of the claims 1 to 12, preferably the food tray comprises a food product.

15. A method of overwrapping a food tray with a film according to any one of claims 1 to 12, the method comprising:

   - providing a food tray to a wrapping unit;
   - providing a film according to any one of claims 1 to 11 to a stretching unit;
   - stretching the film in transverse direction in the stretching unit;
   - applying the film on the food tray in the wrapping unit; and
   - sealing the edges of the film to the food tray.


**Patentansprüche**

1. Nicht-orientierte oder mono-orientierte mehrschichtige Stretchfolie, umfassend mindestens 70 Gew.-% Polyethylen bezogen auf das Gesamtgewicht der Folie, wobei die Folie **gekennzeichnet ist durch**:

   eine Gesamtdichte unter 0,907 g/cm$^3$, wobei die Gesamtdichte auf Grundlage des Polyethylen-Gewichtsanteils der Folie berechnet wird;
   eine positive Zugspannungs-Dehnungs-Kurve über den Bereich von 0 bis 20,0 % Dehnung, wobei die Spannungs-Dehnungs-Kurve **durch** Messungen der Spannung bei jedem 5,0-%-Dehnungsintervall erstellt wird und wobei die Spannung gemäß dem ASTM-D882-18-Standard in Querrichtung der Folie gemessen wird; und eine plastische Verformung von maximal 15,0 %, gemessen in Querrichtung, wobei die plastische Verformung gemäß dem ASTM-D5459-95-Standard gemessen wird.

2. Folie nach Anspruch 1, umfassend mindestens 90 Gew.-% Polyethylen bezogen auf das Gesamtgewicht der Folie.

3. Folie nach Anspruch 1 oder 2, umfassend eine Gesamtdichte unter 0,905 g/cm$^3$; vorzugsweise eine Gesamtdichte von 0,902 g/cm$^3$ oder weniger; wobei die Gesamtdichte auf Grundlage des Polyethylengehalts der Folie berechnet wird.

4. Folie nach einem der Ansprüche 1 bis 3, wobei die Folie eine positive Zugspannungs-Dehnungs-Kurve über den Bereich von 0,0 % bis mindestens 50,0 % Dehnung umfasst, wobei die Spannungs-Dehnungs-Kurve durch Messungen der Spannung bei jedem 5,0-%-Dehnungsintervall erstellt wird und wobei die Spannung gemäß dem ASTM-D882-18-Standard in Querrichtung der Folie gemessen wird.

5. Folie nach einem der Ansprüche 1 bis 4, wobei die Folie mindestens eine Kernschicht umfasst, die zwischen zwei Außenschichten angeordnet ist.

6. Folie nach Anspruch 5, wobei die Gesamtdicke der mindestens einen Kernschicht 5,0 % bis 90,0 % der Gesamtdicke der Folie beträgt.

7. Folie nach Anspruch 5 oder 6, wobei die Dicke der beiden Außenschichten jeweils unabhängig voneinander 5,0 % bis 47,5 % der Gesamtdicke der flexiblen Folie beträgt.

8. Folie nach einem der Ansprüche 1 bis 7, wobei das Polyethylen mindestens ein Copolymer aus Ethylen und mindestens einem Alpha-Olefin ist, vorzugsweise mindestens ein $C_3$-$C_8$-Alpha-Olefin, stärker bevorzugt mindestens ein $C_4$-$C_8$-Alpha-Olefin, noch stärker bevorzugt mindestens ein $C_6$-$C_8$-Alpha-Olefin.

9. Folie nach einem der Ansprüche 1 bis 8, wobei das Polyethylen ein Copolymer aus Ethylen und $C_6$-Alpha-Olefin oder ein Copolymer aus Ethylen und $C_8$-Alpha-Olefin oder eine Kombination eines Copolymers aus Ethylen und $C_6$-Alpha-Olefin mit einem Copolymer aus Ethylen und $C_8$-Alpha-Olefin ist.

10. Folie nach einem der Ansprüche 1 bis 9, wobei die Folie eine extrudierte Blasfolie oder eine extrudierte Gießfolie ist; vorzugsweise eine extrudierte Gießfolie.

11. Folie nach einem der Ansprüche 1 bis 10, wobei die mono-orientierte mehrschichtige Stretchfolie entweder in Maschinenrichtung oder in Querrichtung orientiert ist.

12. Folie nach einem der Ansprüche 1 bis 11, die zur Verwendung in Lebensmittelverpackungsanwendungen geeignet ist, insbesondere geeignet zum Überwickeln von Lebensmittelschalen.

13. Verwendung einer Folie nach einem der Ansprüche 1 bis 12 zur Lebensmittelverpackung, insbesondere zum Überwickeln einer Lebensmittelschale.

14. Lebensmittelschale, die mit der Folie nach einem der Ansprüche 1 bis 12 überwickelt ist, wobei die Lebensmittelschale vorzugsweise ein Lebensmittelprodukt umfasst.

15. Verfahren zum Überwickeln einer Lebensmittelschale mit einer Folie nach einem der Ansprüche 1 bis 12, das Verfahren umfassend:

Bereitstellen einer Lebensmittelschale in einer Wickeleinheit;
Bereitstellen einer Folie nach einem der Ansprüche 1 bis 11 in einer Streckeinheit;
Strecken der Folie in Querrichtung in der Streckeinheit;
Aufbringen der Folie auf die Lebensmittelschale in der Wickeleinheit; und
Versiegeln der Ränder der Folie mit der Lebensmittelschale.

**Revendications**

1. Film étirable multicouche non orienté ou mono-orienté comprenant au moins 70 % en poids de polyéthylène par rapport au poids total du film, le film étant **caractérisé par** :

- une densité globale inférieure à 0,907 g/cm$^3$, dans lequel la densité globale est calculée sur la base de la teneur en polyéthylène du film ;
- une courbe contrainte-déformation positive en traction sur la plage de déformation de 0 à 20,0 %, dans lequel la courbe contrainte-déformation est créée par des mesures de contrainte à chaque intervalle de déformation de 5,0 % et dans lequel la contrainte est mesurée conformément à la norme ASTM D882-18 dans la direction transversale du film ; et
- une déformation plastique maximale de 15,0 % mesurée dans la direction transversale, dans lequel la déformation plastique est mesurée conformément à la norme ASTM D5459-95.

2. Film selon la revendication 1 comprenant au moins 90 % en poids de polyéthylène par rapport au poids total du film.

3. Film selon la revendication 1 ou 2 comprenant une densité globale inférieure à 0,905 g/cm$^3$ ; de préférence une densité globale de 0,902 g/cm$^3$ ou moins ; dans lequel la densité globale est calculée sur la base de la teneur en polyéthylène du film.

4. Film selon l'une quelconque des revendications 1 à 3, dans lequel le film comprend une courbe contrainte-déformation positive en traction sur la plage de déformation de 0,0 % à au moins 50,0 %, dans lequel la courbe contrainte-déformation est créée par des mesures de contrainte à chaque intervalle de déformation de 5,0 %, et dans lequel la contrainte est mesurée conformément à la norme ASTM D882-18 dans la direction transversale du film.

5. Film selon l'une quelconque des revendications 1 à 4, dans lequel le film comprend au moins une couche centrale disposée entre deux couches extérieures.

6. Film selon la revendication 5, dans lequel l'épaisseur globale de l'au moins une couche centrale est comprise entre 5,0 % et 90,0 % de l'épaisseur totale du film.

7. Film selon la revendication 5 ou 6, dans lequel l'épaisseur des deux couches extérieures est chacune indépendamment de 5,0 % à 47,5 % de l'épaisseur totale du film étirable.

8. Film selon l'une quelconque des revendications 1 à 7, dans lequel le polyéthylène est au moins un copolymère d'éthylène et au moins une alpha-oléfine, de préférence au moins une alpha-oléfine en $C_3$-$C_8$, de manière davantage préférée au moins une alpha-oléfine en $C_4$-$C_8$, encore plus particulièrement au moins une alpha-oléfine en $C_6$-$C_8$.

9. Film selon l'une quelconque des revendications 1 à 8, dans lequel le polyéthylène est un copolymère d'éthylène et d'alpha-oléfine en $C_6$ ou un copolymère d'éthylène et d'alpha-oléfine en $C_8$, ou une combinaison d'un copolymère d'éthylène et d'alpha-oléfine en $C_6$ avec un copolymère d'éthylène et d'alpha-oléfine en $C_8$.

10. Film selon l'une quelconque des revendications 1 à 9, dans lequel le film est un film extrudé soufflé ou un film extrudé coulé ; de préférence un film extrudé coulé.

11. Film selon l'une quelconque des revendications 1 à 10, dans lequel le film étirable multicouche mono-orienté est orienté soit dans la direction machine, soit dans la direction transversale.

12. Film selon l'une quelconque des revendications 1 à 11, qui convient à une utilisation dans des applications d'emballage alimentaire, en particulier à une utilisation dans le suremballage de barquettes alimentaires.

13. Utilisation d'un film selon l'une quelconque des revendications 1 à 12 pour l'emballage alimentaire, en particulier pour le suremballage de barquettes alimentaires.

14. Barquette alimentaire recouverte d'un film selon l'une quelconque des revendications 1 à 12, de préférence la barquette alimentaire comprend un produit alimentaire.

15. Procédé de suremballage d'une barquette alimentaire avec un film selon l'une quelconque des revendications 1 à 12, le procédé comprenant :

   - la fourniture d'une barquette alimentaire à une unité d'emballage ;
   - la fourniture d'un film selon l'une quelconque des revendications 1 à 11 à une unité d'étirement ;
   - l'étirement du film dans la direction transversale dans l'unité d'étirement ;
   - l'application du film sur la barquette alimentaire dans l'unité d'emballage ; et
   - le fait de sceller les bords du film sur la barquette alimentaire.

**Figure 1**

**Figure 2**

A

B

**Figure 3**

A

B

**Figure 4**

A

B

**Figure 5**

**A**

**B**

**Figure 6**

A

B

**Figure 7**

A

B

**Figure 8**

A

B

**Figure 9**

**A**

**B**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2274342 A